(19) Europäisches Patentamt
European Patent Office
Office européen des brevets

(11) EP 4 398 169 A1

(12) EUROPEAN PATENT APPLICATION
published in accordance with Art. 153(4) EPC

(43) Date of publication:
10.07.2024 Bulletin 2024/28

(51) International Patent Classification (IPC):
G06Q 10/087 (2023.01)   G05B 19/418 (2006.01)
G06Q 10/04 (2023.01)   G06Q 10/0631 (2023.01)
G06Q 10/20 (2023.01)

(21) Application number: 22864541.2

(22) Date of filing: 30.08.2022

(52) Cooperative Patent Classification (CPC):
G05B 19/418; G06Q 10/04; G06Q 10/0631;
G06Q 10/087; G06Q 10/20; Y02P 90/30

(86) International application number:
PCT/JP2022/032539

(87) International publication number:
WO 2023/032959 (09.03.2023 Gazette 2023/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 01.09.2021 JP 2021142066

(71) Applicant: Hitachi Construction Machinery Co.,
Ltd.
Tokyo 110-0015 (JP)

(72) Inventors:
• FUTAGAMI, Rentaro
  Tokyo 100-8280 (JP)
• FENG, Yixiang
  Tokyo 100-8280 (JP)
• TAKAMI, Hiroki
  Tokyo 110-0015 (JP)
• MURO, Keiro
  Tokyo 100-8280 (JP)

(74) Representative: MERH-IP Matias Erny Reichl
Hoffmann
Patentanwälte PartG mbB
Paul-Heyse-Strasse 29
80336 München (DE)

(54) **COMPONENT ADVANCE DEPLOYMENT ASSISTANCE SYSTEM AND METHOD**

(57) The present invention appropriately executes advance deployment of components. This component advance deployment assistance system includes a server. The server includes: a malfunction prediction section that predicts a malfunction of a machine based on operation information about the machine; an area/customer characteristic estimation section that estimates a characteristic of an area or a characteristic of a customer possessing or using the machine, based on data related to the machine possessed or used by a customer; an order reception probability calculation section that calculates an order reception probability that is a probability of receiving an order of a component associated with the machine, based on outputs from the malfunction prediction section and the area/customer characteristic estimation section; and an advance deployment profit/loss calculation section that calculates a profit/loss in a case of advance deployment of the component to a base near a location of the machine, based on the order reception probability.

EP 4 398 169 A1

**(Cont. next page)**

## Fig. 1

100 — Business data storage section

101 — Operation information table

102 — Inventory management table

103 — Order reception history table

104 — Alert history table

Order reception prediction server

200 —

201 — Area/customer characteristic estimation section

203 — Order reception probability calculation section

202 — Alert prediction section

204 — Advance deployment profit/loss calculation section

300 — Order reception prediction data storage section

301 — Area customer attribute table

302 — Component deployment cost table

303 — Promotional activity cost table

304 — Promotional activity history table

400 — Order reception prediction result storage section

401 — Alert prediction table

402 — Order reception prediction table

403 — Promotion-applied order reception prediction table

404 — Advance deployment profit/loss table

Network

1 —

Distributor terminal

500 —

501 — Advance deployment plan display section

Distributor

Customer terminal

600 —

601 — Advance deployment notification display section

Customer

**Description**

Technical Field

The present invention relates to a component advance deployment assistance system and method.

Background Art

In machines, such as manufacturing apparatuses and construction machines, various components may require replacement and replenishment due to wear and degradation. To improve machine productivity, it is desired to supply to users such components for replacement and replenishment (in advance) before the machines stop or their functions are reduced. A component advance deployment assistance system for such needs is known as described in Patent Literature 1, for example.

The system described in Patent Literature 1 is configured to detect an abnormal state of a machine possessed by a customer according to an output from a sensor, and deploy in advance a component associated with the abnormal state to a deployment base. However, such a conventional system determines a component name and the number of components requiring replacement or the like according to abnormal state information and an actual replacement rate in the past. This may cause a divergence between the number of components actually ordered and the number of components in stock, and cannot avoid needless advance deployment (overstocking) and stock shortage due to a delay in the advance deployment. Such a conventional system has difficulty in deploying components in advance in response to the situation.

Citation List

Patent Literature

Patent Literature 1: JP 2006-33249 A

Summary of Invention

Technical Problem

The present invention provides a component advance deployment assistance system and method that enables appropriate execution of advance deployment of components.

Solution to Problem

In response to the above issue, a component advance deployment assistance system according to the present invention includes a server. The server includes: a malfunction prediction section that predicts a malfunction of a machine based on operation information about the machine; an area/customer characteristic estimation section that estimates a characteristic of an area or a characteristic of a customer possessing or using the machine, based on data related to the machine possessed or used by a customer; an order reception probability calculation section that calculates an order reception probability that is a probability of receiving an order of a component associated with the machine, based on outputs from the malfunction prediction section and the area/customer characteristic estimation section; and an advance deployment profit/loss calculation section that calculates a profit/loss in a case of advance deployment of the component to a base near a location of the machine, based on the order reception probability.

Advantageous Effects of Invention

According to the present invention, there is provided a component advance deployment assistance system and method that enables appropriate execution of advance deployment of components.

Brief Description of Drawings

Fig. 1 is a diagram showing the overall configuration of a component advance deployment assistance system according to an embodiment of the present invention.

Fig. 2 shows an exemplary data configuration of an operation information table 101.
Fig. 3 shows an exemplary data configuration of an inventory management table 102.
Fig. 4 shows an exemplary data configuration of an order reception history table 10.
Fig. 5 shows an exemplary data configuration of an alert history table 104.
Fig. 6 shows an exemplary data configuration of an area customer attribute table 301.
Fig. 7 shows an exemplary data configuration of a component deployment cost table 302.
Fig. 8 shows an exemplary data configuration of a promotional activity cost table 303.
Fig. 9 shows an exemplary data configuration of a promotional activity history table 304.
Fig. 10 is a diagram showing an exemplary data configuration of an alert prediction table 401.
Fig. 11 shows an exemplary data configuration of an order reception prediction table 402.
Fig. 12 shows an exemplary data configuration of a promotion-applied order reception prediction table 403.
Fig. 13 shows an exemplary data configuration of an advance deployment profit/loss table 404.
Fig. 14 is a flowchart of a procedure of data processing in an order reception prediction server 200.
Fig. 15 is a flowchart of an example of the details of step S201 of Fig. 14 (a detailed procedure of data processing in an area/customer characteristic estimation section 201).
Fig. 16A is a flowchart of the details of step S2010 (calculation of a degree of accessibility to non-genuine components in an area).
Fig. 16B is a flowchart of the details of step S2010 (calculation of a degree of accessibility to non-genuine components in an area).
Fig. 17 is a flowchart of an example of a procedure of calculating a numerical value indicating a positive attitude for maintenance of a customer.
Fig. 18 is a flowchart of an example of a detailed procedure of calculating a busy month.
Fig. 19A is a flowchart of an example of a detailed procedure of data processing in an alert prediction section 202.
Fig. 19B is a flowchart of an example of a detailed procedure of data processing in the alert prediction section 202.
Fig. 20A is a flowchart of a specific procedure of calculating an order reception probability.
Fig. 20B is a flowchart of a specific procedure of calculating an order reception probability.
Fig. 21A is a flowchart of a specific procedure of calculating an advance deployment profit/loss.
Fig. 21B is a flowchart of a specific procedure of calculating an advance deployment profit/loss.
Fig. 21C is a flowchart of a specific procedure of calculating an advance deployment profit/loss.
Fig. 22 shows an exemplary screen of an advance deployment plan display section 501.
Fig. 23 shows an exemplary screen of an advance deployment notification display section 601.
Fig. 24 shows an exemplary operation in the advance deployment plan display section 501.
Fig. 25 shows an exemplary operation in the advance deployment notification display section 601.

Description of Embodiments

The following describes the present embodiment with reference to the attached drawings. In the attached drawings, functionally the same components may be represented with the same number. Note that while the attached drawings illustrate embodiments and exemplary implementations according to the principle of the present disclosure, these are for understanding the present disclosure, and are never used for interpreting the present disclosure in a limited way. Description in this specification is merely a typical example, and is not to limit claims or application examples of the present disclosure in any sense.

While in the present embodiment, its description is made in detail enough for a person skilled in the art to implement the present disclosure, other implementations and configurations are also possible, and it should be understood that changes in configurations and structures and replacement of various components are allowed without departing from a scope or a spirit of the technical concept of the present disclosure. Accordingly, the subsequent description should not be interpreted in a limiting sense.

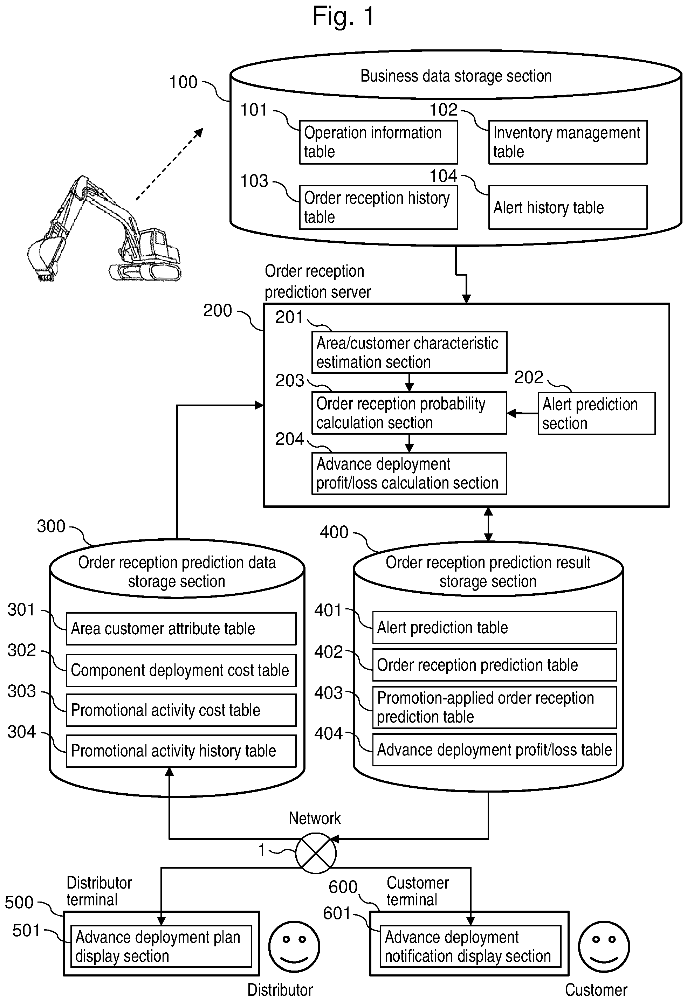

Fig. 1 is a diagram showing the overall configuration of a component advance deployment assistance system according to an embodiment of the present invention. In the example of Fig. 1, a system that assists advance deployment of components of a construction machine will be described. The basic configuration of the system is the same even if a target machine is a machine other than a construction machine.

As used herein, the term "advance deployment" means prediction of a component that may be ordered according to malfunction information about a machine, and delivery of the component from a remote deployment base or the like to a deployment base near the location of the machine before any order is received from a customer. In contrast, the term "post deployment" means direct delivery of a component to the nearest deployment base or a machine operating site after the component is ordered from a customer. The system of the present embodiment is intended to appropriately execute the advance deployment of components and avoid a delay in component delivery, and also to provide assistance not to increase monetary loss due to the advance deployment. In this specification, a deployment base near the location of a machine is referred to as a "distributor," and a deployment base farther than the distributor is referred to as a "distribution base (depot)."

The system of Fig. 1 includes a business data storage section 100, an order reception prediction server 200, an order reception prediction data storage section 300, and an order reception prediction result storage section 400. In the present system, the order reception prediction server 200 has a function of calculating an order reception probability of a component of a construction machine and a function of calculating a profit/loss (advance deployment profit/loss) when advance deployment of a component is executed. The order reception prediction server 200 calculates an order reception probability and an advance deployment profit/loss according to various kinds of business data stored in the business data storage section 100, and order reception prediction data stored in the order reception prediction data storage section 300. The order reception prediction server 200 is coupled to a distributor terminal 500 operated by a distributor as a component intermediary and a customer terminal 600 operated by a customer possessing and using a construction machine, via a network 1.

The business data storage section 100 is a storage section (database) that stores business data related to a construction machine possessed and used by a customer (operation information, component inventory management, component order reception history, alert history of malfunction alarms, and the like). Though not illustrated, various sensors are attached to a body of the construction machine possessed and used by a customer, and information about an operation state of the construction machine can be acquired from the sensors. The acquired information about the operation state is periodically transmitted to and stored in the business data storage section 100 via the network using wireless communication.

The order reception probability and the advance deployment profit/loss calculated in the order reception prediction server 200 are transmitted to and stored in the order reception prediction result storage section 400. According to the calculated order reception probability and advance deployment profit/loss, it is determined whether to execute advance deployment of components. The determination result is displayed in the advance deployment notification display section 601 of the customer terminal 600 according to a request from the customer terminal 600. In addition, an advance deployment plan prepared according to the calculated order reception probability and advance deployment profit/loss is transmitted to the distributor terminal 500 and displayed in the advance deployment plan display section 501.

In one example, the business data storage section 100 includes an operation information table 101, an inventory management table 102, an order reception history table 103, and an alert history table 104. The operation information table 101 is a table that stores information (operation information) about various operation states of construction machines, and the inventory management table 102 is a table that stores information about component inventory management in various distributors (deployment base). The order reception history table 103 is a table that stores information about a history (order reception history) of orders of components received from customers. The alert history table 104 is a table that stores information about a history (alert history) of malfunction alerts generated from construction machines.

In one example, the order reception prediction server 200 includes an area/customer characteristic estimation section 201, an alert prediction section 202, an order reception probability calculation section 203, and an advance deployment profit/loss calculation section 204. The area/customer characteristic estimation section 201 has a function of estimating a characteristic of an area where a customer possesses or uses a machine and a characteristic of the customer. The estimation is performed according to various kinds of data provided by the order reception prediction data storage section 300. The alert prediction section 202 has a function of predicting alerting that indicates a malfunction in each construction machine according to various kinds of information. The alert prediction section 202 is one form of a malfunction prediction section that predicts a malfunction in a construction machine based on the operation information about the machine. The order reception probability calculation section 203 has a function of calculating an order reception probability of a certain component according to outputs from the area/customer characteristic estimation section 201 and the alert prediction section 202. The advance deployment profit/loss calculation section 204 has a function of calculating a profit/loss when advance deployment of that component is executed.

In one example, the order reception prediction data storage section 300 includes an area customer attribute table 301, a component deployment cost table 302, a promotional activity cost table 303, and a promotional activity history table 304, and stores (saves) order reception prediction data used for calculation of an order reception probability in the order reception probability calculation section 203 and calculation of an advance deployment profit/loss in the advance deployment profit/loss calculation section 204. The area customer attribute table 301 stores data representing an attribute of a customer belonging to a certain area. The component deployment cost table 302 stores data representing a deployment cost for each component. The promotional activity cost table 303 stores data related to a cost for a certain promotional sales activity (hereinafter referred to as "promotional activity" for short). The promotional activity history table stores data related to a history of executed promotional activities. These kinds of data are supplied to the above-described area/customer characteristic estimation section 201, and used for estimating a characteristic of an area and a characteristic of a customer.

In one example, the order reception prediction result storage section 400 includes an alert prediction table 401, an order reception prediction table 402, a promotion-applied order reception prediction table 403, and an advance deployment profit/loss table 404. The alert prediction table 401 is a table that stores data related to a malfunction alarm (alerting) generated from each construction machine. The order reception prediction table 402 is a table that stores an order reception probability of a component of each construction machine and other prediction data related to order reception. The promotion-applied order reception prediction table 403 is a table that stores an order reception probability of a component and other prediction data related to order reception when a promotional activity is performed. The advance deployment profit/loss table 404 is a table that stores data related to an advance deployment profit/loss calculated in the advance deployment profit/loss calculation section 204.

Note that the business data storage section 100, the order reception prediction server 200, the order reception prediction data storage section 300, and the order reception prediction result storage section 400 may be each configured independently as hardware, such a storage device or a server device, or may be implemented by a unitary data server.

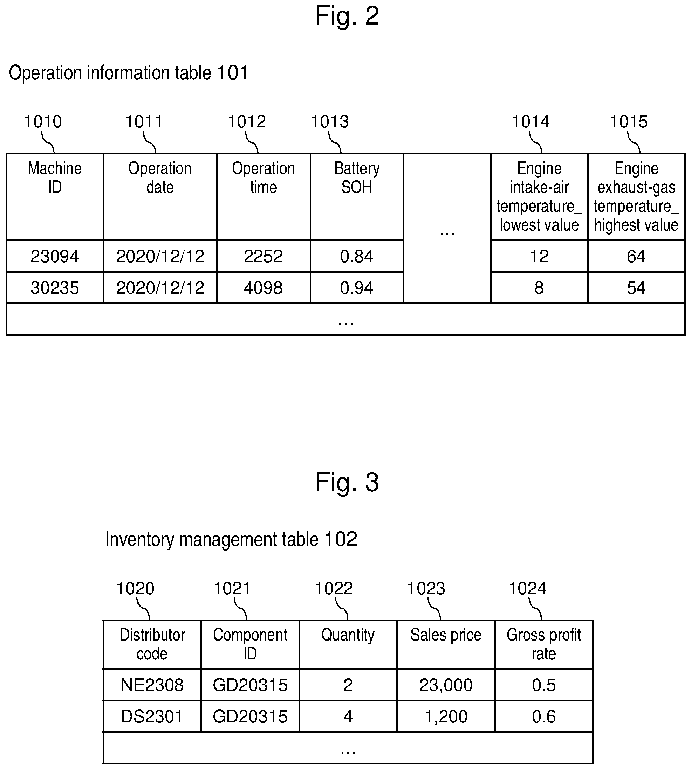

Referring to Fig. 2, an exemplary data configuration of the operation information table 101 will be described. The operation information table 101 stores, as examples of data items, machine ID 1010, operation date 1011, operation time 1012, battery SOH (State of Health) 1013, engine intake-air temperature lowest value 1014, and engine exhaust-gas temperature highest value 1015, where a single row of data represents operational data (operation time, battery SOH, lowest value of engine intake-air temperature, highest value of engine exhaust-gas temperature, and the like) on a certain construction machine (machine ID) on a certain operation date. The battery SOH indicates soundness of a battery, indicating a degree of normal operation capability without a malfunction or function reduction. The battery SOH, the engine intake-air temperature, and the like can be measured by the various sensors disposed on the construction machine. The battery SOH, the engine intake-air temperature, and the like are numerical values that have an influence on an alerting timing in the construction machine. It is needless to mention that the data items shown in Fig. 2 are examples, and should not be limited thereto.

Referring to Fig. 3, an exemplary data configuration of the inventory management table 102 will be described. The inventory management table 102 contains, as examples of data items, distributor code 1020, component ID 1021, quantity 1022, sales price 1023, and gross profit rate 1024, where a single row of data represents a stock state (stock quantity, sales price, gross profit rate, and the like) related to a certain component in a certain distributor (distributor code).

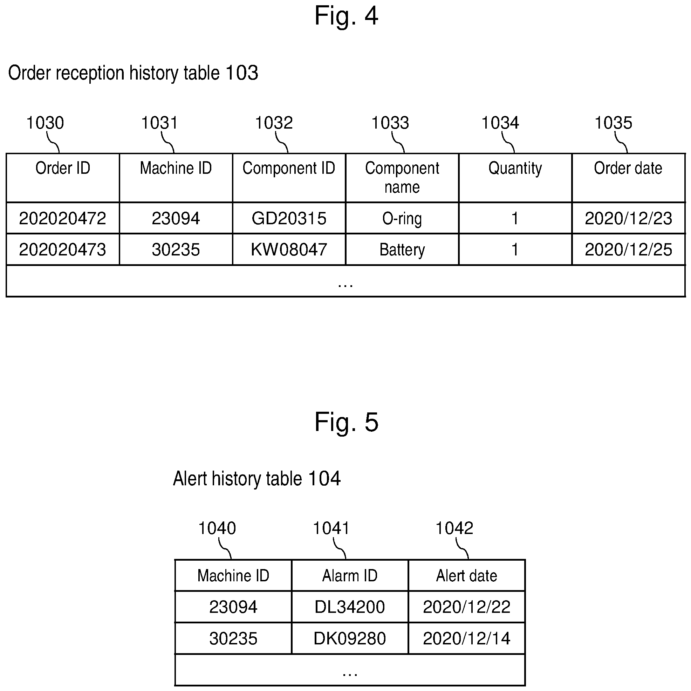

Referring to Fig. 4, an exemplary data configuration of the order reception history table 103 will be described. The order reception history table 103 contains, as examples of data items, order ID 1030, machine ID 1031, component ID 1032, component name 1033, quantity 1034, and order date 1035. The order ID 1030 is an identification sign of each individual order, the machine ID 1031 is an identification sign of a construction machine, and the component ID 1032 is an identification sign of a component. A single row of data represents order data (various IDs) on a single component in a certain construction machine, together with component name, quantity, order date, and the like. Note that in one order, a plurality of components may be ordered. In this case, the same order ID 1030 is given to the plurality of components, and in the order reception history table 103, data with the same order ID 1030 is generated across a plurality of rows. That is, the order ID 1030 is given to each combination of the machine ID 1031 and the component ID 1032.

Referring to Fig. 5, an exemplary data configuration of the alert history table 104 will be described. The alert history table 104 contains, as examples of data items, machine ID 1040, alarm ID 1041, and alert date 1042. A single row of data represents when and in which construction machine an alarm is generated.

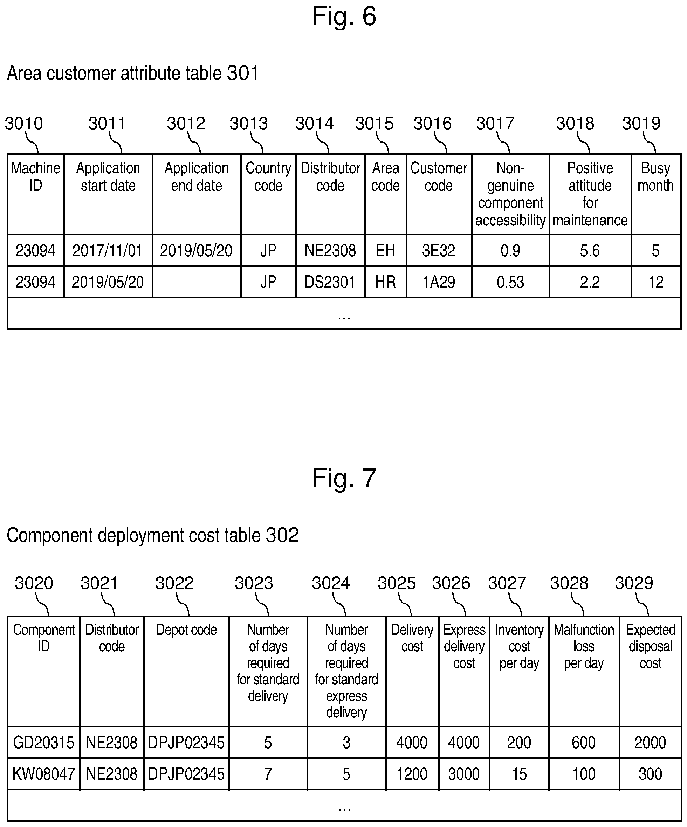

Referring to Fig. 6, an exemplary data configuration of the area customer attribute table 301 will be described. In one example, the area customer attribute table 301 contains machine ID 3010, application start date 3011, application end date 3012, country code 3013, distributor code 3014, area code 3015, customer code 3016, non-genuine component accessibility 3017, positive attitude for maintenance 3018, and busy month 3019. A single row of data represents a characteristic of a country/area or a characteristic of a customer to which a certain construction machine of the machine ID 3010 belongs in a period from the application start date 3011 to the application end date 3012.

The application start date 3011 and the application end date 3012 indicate a period (starting date, end date) in which the single row of data is applied. The construction machine may be subject to change in its operation location or owner due to movement of the machine or transfer of the machine to the others (transaction, lending, lease, and the like). Thus, the area customer attribute table 301 contains the application start date 3011 and the application end date 3012 as the data items, so that an application period can be specified. The application start date 3011 and the application end date 3012 are examples, and may be omitted. The customer ID is stored in the customer code 3016, classifications of the area where the customer is located are stored in the area code 3015, classifications of the country where the customer is located are stored in the country code 3013, and the distributor code is stored in the distributor code 3014.

The non-genuine component accessibility 3017 is a numerical value indicating an availability of a non-genuine component (unauthorized component) which is an alternative of a component predicted to require replacement. Whether or not a non-genuine component is available depends on the area or the policy of a customer company, and the like. Thus, indicating the availability of a non-genuine component by a numerical value can express an attribute of an area or a customer. The positive attitude for maintenance 3018 is an index of a degree of positive involvement of the customer in the maintenance task for a construction machine. The higher the numerical value of the positive attitude for maintenance 3018, the higher the order reception probability of the component when a problem arises in the construction machine. The busy month 3019 indicates a numerical value of the month indicating a busy period for the business in the customer company. Data on the non-genuine component accessibility 3017, the positive attitude for maintenance 3018, and the busy month 3019 indicates values estimated and stored in the area/customer characteristic estimation section 201.

Referring to Fig. 7, an exemplary data configuration of the component deployment cost table 302 will be described. In one example, the component deployment cost table 302 contains component ID 3020, distributor code 3021, depot code 3022, the number of days required for standard delivery 3023, the number of days required for standard express delivery 3024, delivery cost 3025, express delivery cost 3026, inventory cost per day 3027, malfunction loss per day 3028, and expected disposal cost 3029. A single row of data represents costs (delivery cost, express delivery cost, inventory cost per day, malfunction loss per day, expected disposal cost, and the like) when advance deployment or post deployment of a certain component of the component ID 3020 is executed from a certain distribution base (depot) of the depot code 3022 to a certain distributor of the distributor code 3021. The inventory cost per day 3027 indicates an inventory management cost per day required to store the component at the distributor. The malfunction loss per day 3028 indicates an expected amount (per day) of sales decrease in the future due to reduction in customer reliability caused by a machine malfunction.

The expected disposal cost 3029 indicates an expected value of a disposal cost in the case of loss or damage of the component deployed in advance or return to a depot with a predetermined probability. Any combination of data on various costs may be possible, and a cost item other than those shown in Fig. 7 may be added, or a part of the illustrated items may be deleted. The definition of the data item may be changed. In addition, the costs may be modeled so that the delivery cost is a variable cost depending on the time. Furthermore, instead of storing costs for each component, a fixed cost may be applied across the board to all components or some costs may be allocated to components at predetermined rates with respect to a given cost.

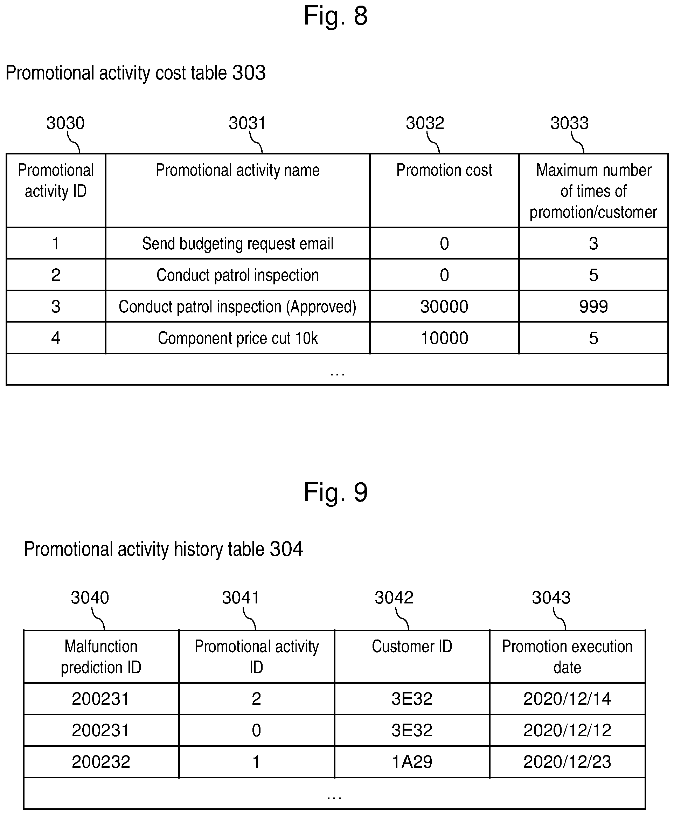

Referring to Fig. 8, an exemplary data configuration of the promotional activity cost table 303 will be described. The promotional activity cost table 303 contains, as examples of data items, promotional activity ID 3030, promotional activity name 3031, promotion cost 3032, and the maximum number of times of promotion/customer 3033. A single row of data represents a cost (3032) when a certain promotional activity is performed and the maximum number of times of promotion (3033) performed for the same customer per month. The promotion cost 3032 and the maximum number of times of promotion/customer 3033 may vary depending on the type and price of component to be promoted, for example. The promotional activity name 3031 contains a promotional activity name labeled with (Approved) and a promotional activity name not labeled with (Approved) when the promotional activity requires a customer approval before execution. For the promotional activity not labeled with (Approved), an inquiry about the promotional activity is made to the customer.

Referring to Fig. 9, an exemplary data configuration of the promotional activity history table 304 will be described. The promotional activity history table 304 contains, as examples of data items, malfunction prediction ID 3040, promotional activity ID 3041, customer ID 3042, and promotion execution date 3043. A single row of data represents a promotional activity (target customer, promotion execution date, and the like) performed when a component as a countermeasure for the malfunction is deployed in advance, in response to the malfunction prediction ID 3040 as a result of predicting malfunction alarm generation in a certain construction machine. The single row of data may contain more than one promotional activity ID 3041 and more than one promotion execution date 3043 with respect to one malfunction prediction ID 3040. The data in the row in which the promotional activity ID 3041 indicates 0 represents a record of the execution of advance deployment, not a promotional activity.

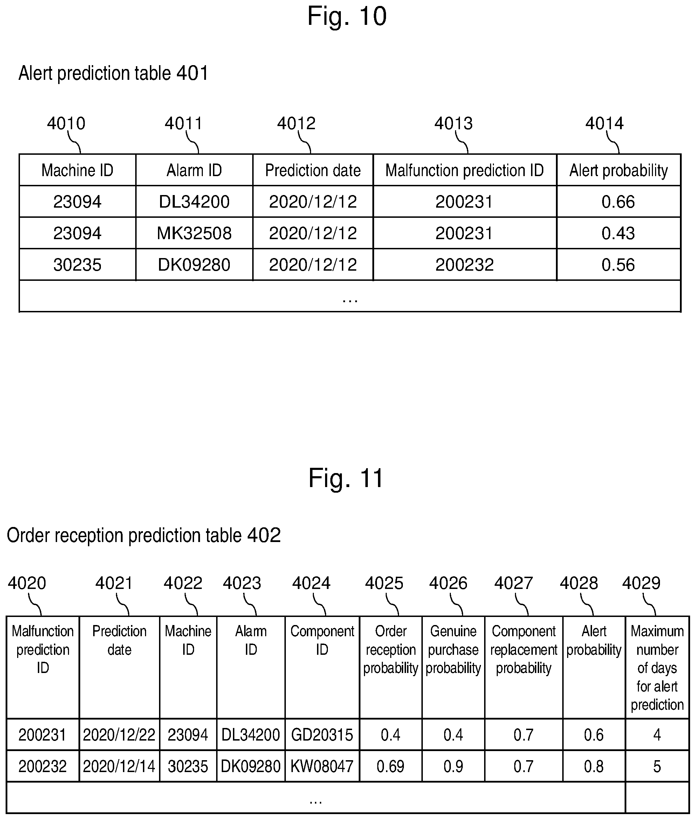

Referring to Fig. 10, an exemplary data configuration of the alert prediction table 401 will be described. The alert prediction table 401 contains, as examples of data items, machine ID 4010, alarm ID 4011, prediction date 4012, malfunction prediction ID 4013, and alert probability 4014. A single row of data represents a probability of generation of a certain alarm of the alarm ID 4011 in a certain construction machine of the machine ID 4010 within a few days from a certain prediction date (4012). The alert probability 4014 stores a result of processing in the alert prediction section 202. The malfunction prediction ID 4013 is a unique prediction ID related to the machine/alarm/prediction date.

Referring to Fig. 11, an exemplary data configuration of the order reception prediction table 402 will be described. The order reception prediction table 402 contains, as examples of data items, malfunction prediction ID 4020, prediction date 4021, machine ID 4022, alarm ID 4023, component ID 4024, order reception probability 4025, genuine purchase probability 4026, component replacement probability 4027, alert probability 4028, and the maximum number of days for alert prediction 4029. A single row of data represents a case of a malfunction prediction (4020) made based on a malfunction alarm (4923) generated from a certain construction machine (4022) on a certain date (4021), and a component ID (4024) of the component associated with the malfunction prediction and an order reception probability (4025) thereof, and the like. Together with the order reception probability, the single row of data also contains a probability (4026) that the customer purchases a genuine component, a probability (4027) that the customer replaces the component in response to the malfunction alarm, and a probability (4028) of generating a malfunction alarm. The order reception probability 4025 indicates a probability that a component is finally ordered at a distributor according to the various probabilities 4026 to 4028.

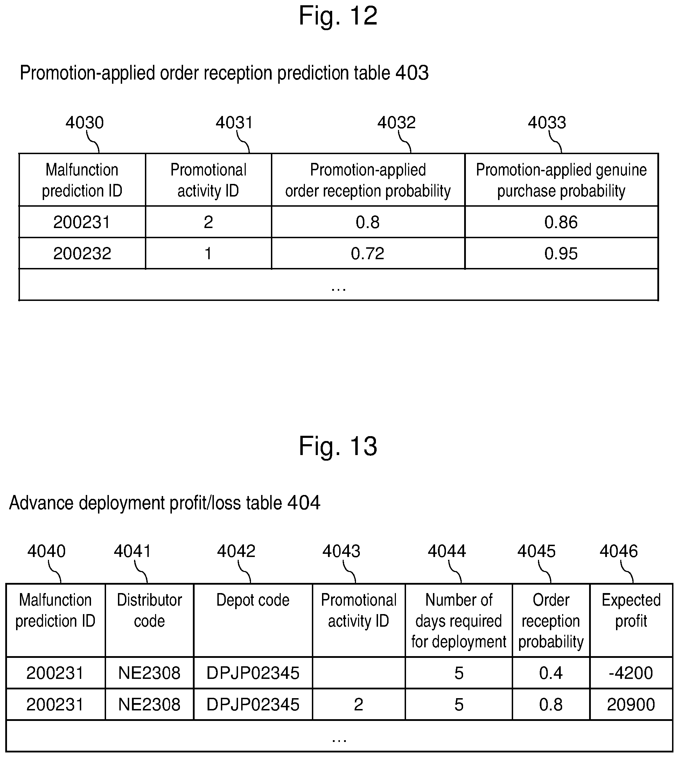

Referring to Fig. 12, an exemplary data configuration of the promotion-applied order reception prediction table 403 will be described. The promotion-applied order reception prediction table 403 contains, as examples of data items, malfunction prediction ID 4030, promotional activity ID 4031, promotion-applied order reception probability 4032, and promotion-applied genuine purchase probability 4033. A single row of data represents, in each malfunction prediction ID 4030, a probability (4033) of purchasing a genuine component as a malfunction countermeasure and a promotion-applied order reception probability (4032), which is a probability that a component is finally ordered, when a promotional activity of the promotional activity ID 4031 is performed.

Referring to Fig. 13, an exemplary data configuration of the advance deployment profit/loss table 404 will be described. A single row of data in the advance deployment profit/loss table 404 represents, with respect to a certain malfunction prediction ID 4040, the number of days required for deployment 4044, an order reception probability 4045, which is a probability of receiving an order of a component as a countermeasure, and an expected profit 4046, which is an expected profit obtained as compared with the case of post deployment resulting from advance deployment, when the advance deployment of a component is executed from a certain depot of the depot code 4042 to a certain distributor of the distributor code 4041. The order reception probability 4045 and the expected profit 4046 in the case of performing a promotional activity with respect to each malfunction prediction ID 4040 are stored in the same row as the one containing the corresponding promotional activity ID 4043 of the promotional activity.

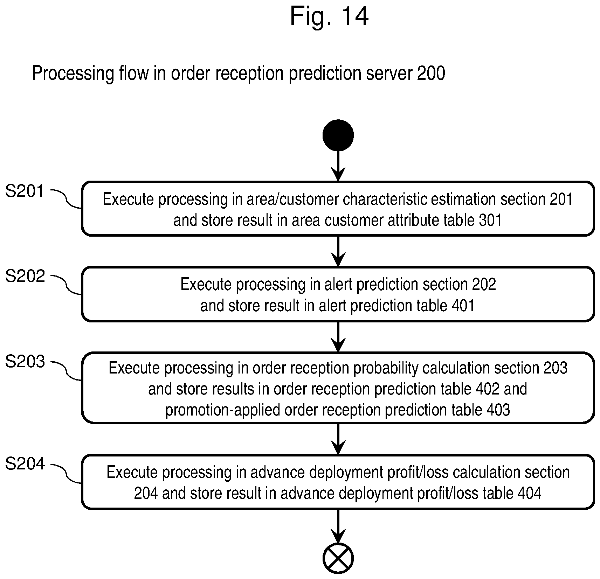

Next, referring to Fig. 14 to Fig. 25, the operation of the component advance deployment assistance system of the present embodiment will be described. As described, the order reception prediction server 200 executes data processing in the area/customer characteristic estimation section 201 and the alert prediction section 202 according to the data acquired from the business data storage section 100 and the order reception prediction data storage section 300, inputs the result to the order reception probability calculation section 203, and executes predetermined data processing. The data processing result is input to the advance deployment profit/loss calculation section 204, then an advance deployment profit/loss is calculated, and a result of the calculation is stored in the order reception prediction result storage section 400.

Referring to the flowchart of Fig. 14, a procedure of data processing in the order reception prediction server 200 will be described. The order reception prediction server 200 acquires various kinds of data from the business data storage section 100 and the order reception prediction data storage section 300, estimates data related to characteristics of an area and a customer according to the acquired data in the area/customer characteristic estimation section 201, and stores the estimated characteristics data in the area customer attribute table 301 (step S201). Alert prediction in each construction machine is made in the alert prediction section 202, and a result of the prediction is stored in the alert prediction table 401 (step S202).

Then, according to the obtained data related to the characteristic of the area/customer and the alert prediction data, the order reception probability calculation section 203 calculates an order reception probability, which is a probability of receiving an order of a component, and a promotion-applied order reception probability when a promotional activity is performed (step S203). The calculated order reception probability and promotion-applied order reception probability are stored in the order reception prediction table 402 and the promotion-applied order reception prediction table 403, respectively. Furthermore, the advance deployment profit/loss calculation section 204 calculates an advance deployment profit/loss associated with the component based on the calculated order reception probability and promotion-applied order reception probability in consideration of the data in the component deployment cost table 302 and the promotional activity cost table 303, and stores a result of the calculation in the advance deployment profit/loss table 404 (step S204).

It should be noted that the data processing in the order reception prediction server 200 shown in Fig. 14 is executed through batch processing at a frequency of, for example, once per day.

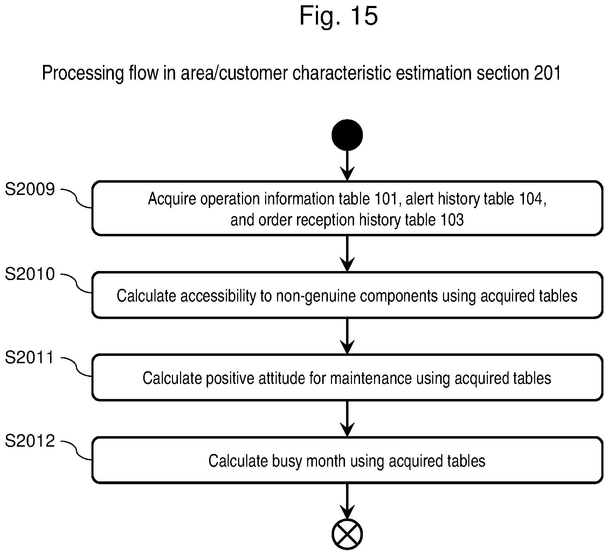

Referring to the flowchart of Fig. 15, an example of the details of step S201 of Fig. 14 (a detailed procedure of data processing in the area/customer characteristic estimation section 201) will be described. In the order reception prediction server 200, first, the area/customer characteristic estimation section 201 acquires the operation information, the order reception history information, the alert history information, and the like from the operation information table 101, the order reception history table 103, and the alert history table 104 in the business data storage section 100, respectively, and based on the acquired data, executes processing of numerically estimating data related to the characteristic of the area or the customer that may affect the order reception probability of the maintenance component of the construction machine. The data related to the characteristic is not particularly limited. Examples of such data may include data representing a degree of accessibility to non-genuine components in the area, data related to a positive attitude for maintenance of the customer, data representing whether it is a busy month, data related to the financial strength of the customer, and the like. These are contained in the data items in the area customer attribute table 301.

Referring to the flowchart of Fig. 15, a procedure of data processing in the area/customer characteristic estimation section 201 will be described. First, the area/customer characteristic estimation section 201 receives data in the operation information table 101, the alert history table 104, and the order reception history table 103 from the business data storage section 100 (step S2009).

Next, the area/customer characteristic estimation section 201 calculates a degree of accessibility to non-genuine components based on the data acquired from each table (step S2010). Then, based on the data acquired from each table, the area/customer characteristic estimation section 201 calculates a positive attitude for maintenance (step S2011). Finally, based on the data acquired from each table, the area/customer characteristic estimation section 201 calculates a busy month (step S2012).

Note that although "degree of accessibility to non-genuine components," "positive attitude for maintenance," and "busy month" are requirements for calculating an area/customer characteristic, not all of these three need be calculated. At least one of them may be calculated according to the situation. Fig. 15 shows an exemplary procedure when area/customer characteristic information can be more finely calculated by calculating the above-stated three types of data. The order of data acquisition in step S2010 to step S2012 is not limited to the order shown in Fig. 15. For example, first "busy month," then "positive attitude for maintenance," and finally "degree of accessibility to non-genuine components" may be acquired.

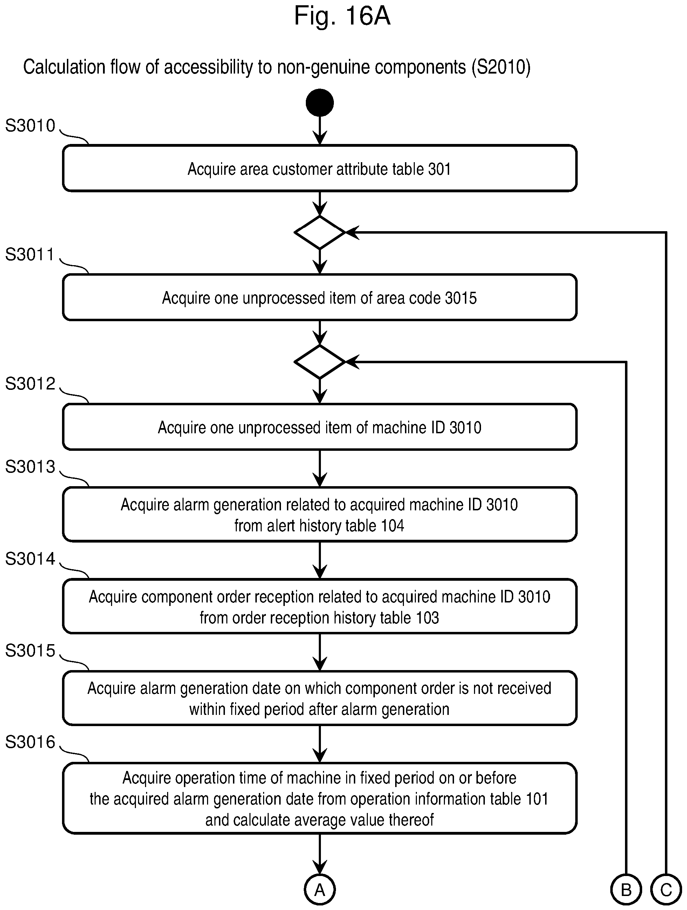

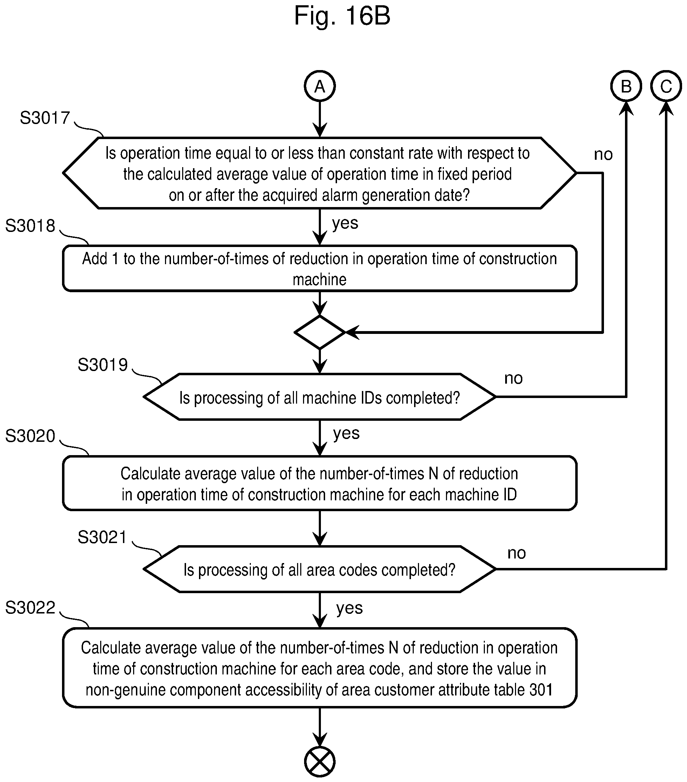

Referring to the flowcharts of Fig. 16A to Fig. 16B, details of step S2010 (calculation of a degree of accessibility to non-genuine components in an area) will be described. First, the area/customer characteristic estimation section 201 acquires the area customer attribute table 301 (step S3010), and from the area customer attribute table 301, acquires one unprocessed item of the area code (step S3011), and further, one unprocessed item of the machine ID 3010 (step S3012).

Then, the area/customer characteristic estimation section 201 acquires a history of malfunction alarm generation in the construction machine associated with the acquired machine ID 3010 from the alert history table 104 (step S3013), and acquires a history of component order reception of the construction machine associated with the acquired machine ID 3010 from the order reception history table 103 (step S3014). Then, the area/customer characteristic estimation section 201 references the alert date 1042 and the machine ID 1040 in the acquired alert history table 104, and determines, within a certain range of the number of days on or after the alert date 1042 related to the construction machine of the machine ID 1031, whether there is a component order received within a fixed period (for example, the last one month) with reference to the order reception history table 103.

If there is no component order received, the area/customer characteristic estimation section 201 acquires data on that alert date 1042 (step S3015), and calculates, with reference to the operation information table 101, an average value of the operation time of the construction machine of the machine ID 1010 (step S3016). Then, the area/customer characteristic estimation section 201 determines whether the value of the operation time 1011 in the operation information table 101 is reduced by larger than or equal to a constant value or constant rate as compared to the average value within the fixed period (for example, the last one month) on or after the alarm generation date (step S3017). If the determination is positive (yes), the process moves to step S3018, and if the determination is negative (no), the process moves to step S3019.

In step S3018, it is determined that the operation time of the construction machine is reduced, and the area/customer characteristic estimation section 201 adds 1 to the number-of-times data N (step S3018). If the determination is "no" in step S3017, the process skips step S3018. The above-described step S3012 to step S3018 are repeated until the processing of all of the machine codes is completed (step S3019). If the processing of all of the machine codes is completed in step S3019 (yes), the area/customer characteristic estimation section 201 calculates an average value of the number-of-times N of reduction in the operation time of the construction machine for each processed machine code (step S3020).

The above-described step S3012 to step S3020 are repeated until the processing of all of the area codes is completed (step S3021). If the processing of all of the area codes is completed in step S3021 (yes), the area/customer characteristic estimation section 201 calculates an average value of the number-of-times N of reduction in the operation time of the construction machine for each area code, and stores the calculated value in the non-genuine component accessibility 3017 of the area customer attribute table 301 (step S3022). Through the above processes, the procedure of calculating a numerical value related to an availability of a non-genuine component is completed.

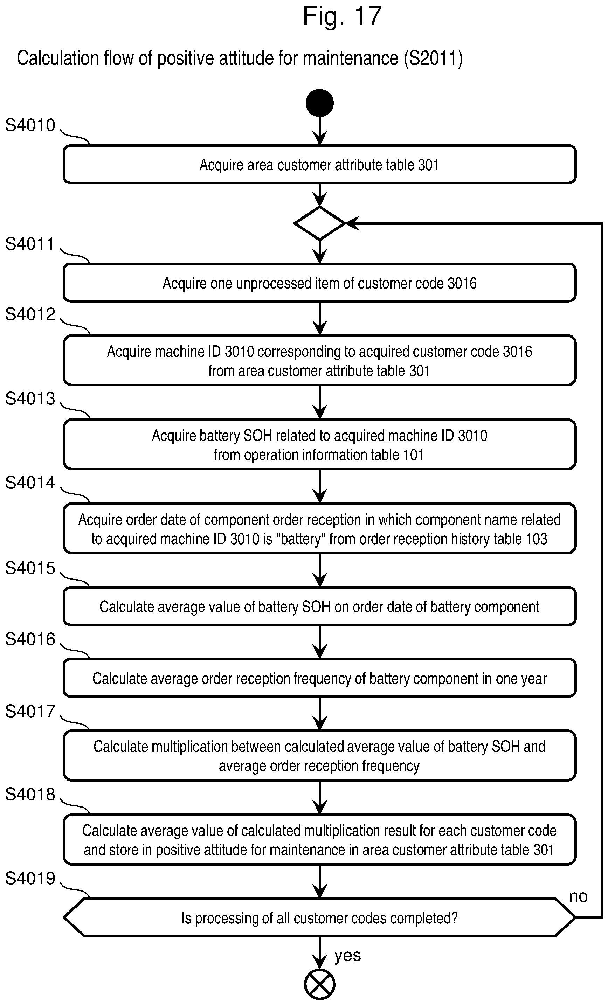

Next, referring to the flowchart of Fig. 17, an example of a procedure of calculating a numerical value indicating a positive attitude for maintenance of the customer will be described. In this procedure of Fig. 17, the area/customer characteristic estimation section 201 calculates a positive attitude for maintenance of the customer using, as factors, a replacement frequency of the battery in the construction machine possessed by the customer and a remaining battery life at the time of battery replacement.

Specifically, first, the area/customer characteristic estimation section 201 acquires the area customer attribute table 301 (step S4010), and acquires one unprocessed item of the customer code from the area customer attribute table 301 (step S4011). Then, the area/customer characteristic estimation section 201 acquires the machine ID 3010 corresponding to the acquired customer code from the area customer attribute table 301 (step S4012). Further, the area/customer characteristic estimation section 201 acquires a value of the battery SOH (1013) related to the acquired machine ID 3010 from the operation information table 101 (step S4013).

Next, the area/customer characteristic estimation section 201 acquires data on the order date (1035) in the order reception data in which the component name (1033) related to the machine ID 3010 acquired in step S4012 is "battery" from the order reception history table 103 (step S4014). Then, the area/customer characteristic estimation section 201 calculates an average value of the battery SOH on the order date of that battery (step S4015). In addition, the area/customer characteristic estimation section 201 calculates an average order reception frequency in a year of the battery component (step S4016).

The average order reception frequency in a year of the battery component can be calculated, for example, according to the number of updates per year of the order reception history data representing the order reception of the battery component. In addition, when the value of the battery SOH 1013 in the operation information table 101 is recovered from a certain low value to a value close to 100%, it may also be assumed that the battery component has been newly ordered.

Next, the area/customer characteristic estimation section 201 multiplies the calculated average value of the battery SOH by the value of the average order reception frequency (step S4017), and for a result of the multiplication, calculates an average value for each customer code 3016. The area/customer characteristic estimation section 201 stores the calculated value in the positive attitude for maintenance 3018 in the area customer attribute table 301 (step S4018). Then, the above-described step S4011 to step 4018 are repeated until the processing of all of the customer codes is completed (step S4019).

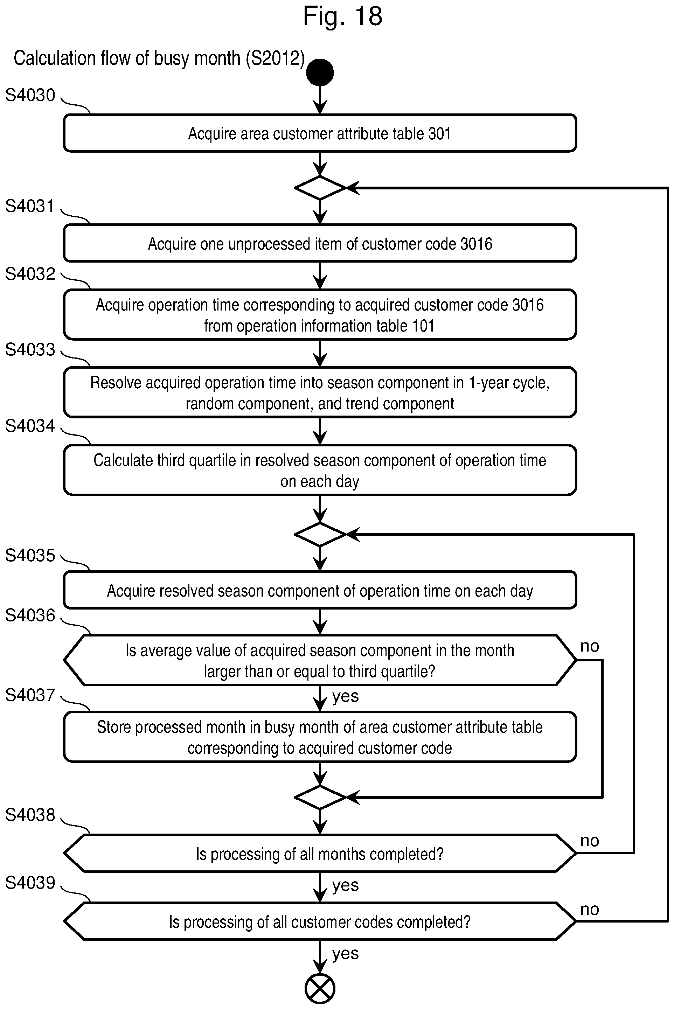

Next, referring to the flowchart of Fig. 18, an example of a detailed procedure of calculating a busy month will be described. In one example, the busy month of the customer can be calculated with reference to the data on the operation time 1012 in the operation information table 101.

Specifically, the area/customer characteristic estimation section 201 first acquires the area customer attribute table 301 (step S4030), and then acquires one unprocessed item of the customer code from the area customer attribute table 301 (step S4031). Then, the area/customer characteristic estimation section 201 acquires the operation time data corresponding to the acquired customer code from the operation information table 101 (step S4032). In one example, the area/customer characteristic estimation section 201 acquires data on the operation time 1012 of all construction machines for each customer code 3016 in a period of about five years from the operation information table 101, and using a known method, resolves the variations in the operation time into a season component in 1-year cycle, a random component, and a trend component (step S4033). In addition, the area/customer characteristic estimation section 201 calculates a third quartile in the resolved season component of the operation time on each day (step S4034).

Next, after acquiring the resolved season component of the operation time on each day in a certain unprocessed month (step S4035), the area/customer characteristic estimation section 201 determines whether the average value of the season component is larger than or equal to the third quartile calculated in step S4034 (step S4036). If the determination is positive (yes), the processed month is determined to be a busy month of the customer, and can be stored in the busy month 3019 of the area customer attribute table 301 (step S4037). The above procedure is repeated until such data processing is executed for all of the months and all of the customer codes (step S4038, S4039).

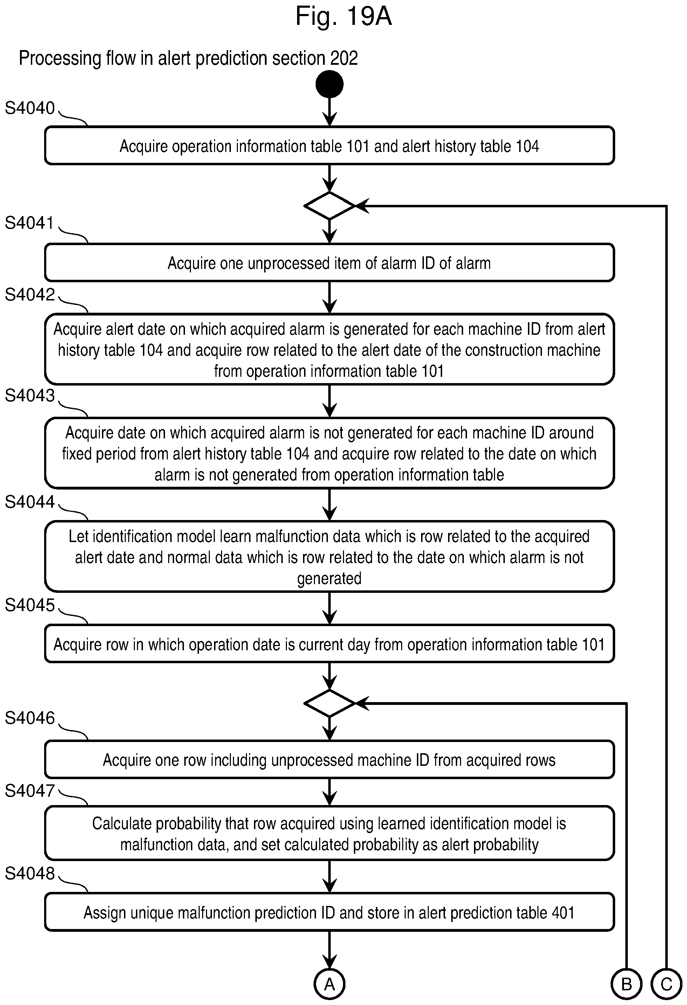

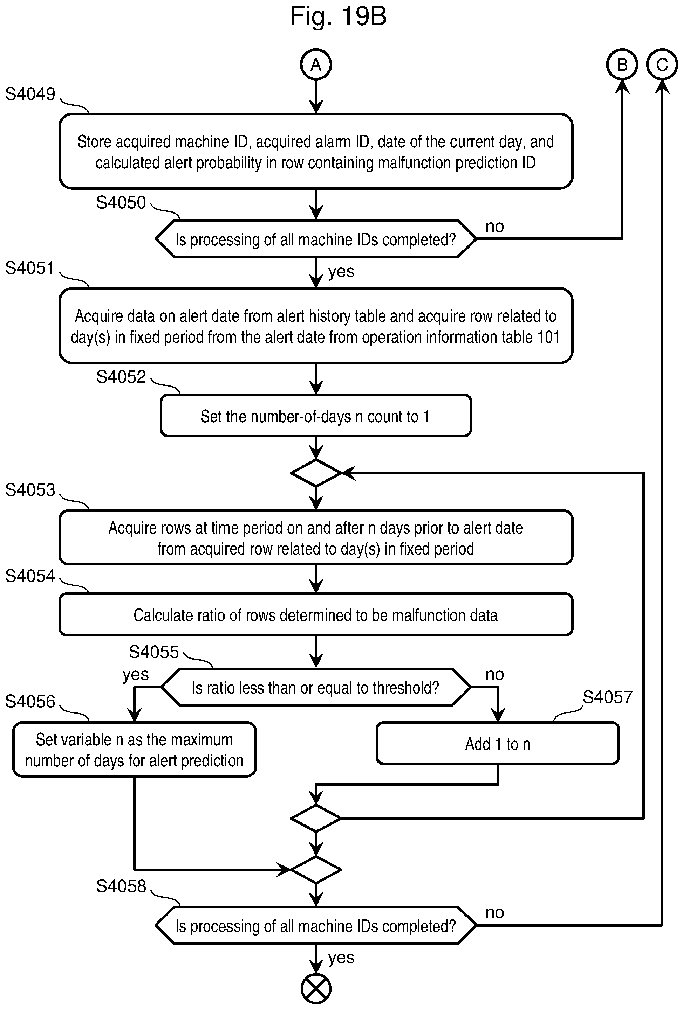

Next, referring to the flowcharts of Fig. 19A, Fig. 19B, an example of a detailed procedure of data processing in the alert prediction section 202 will be described. In the procedure of Fig. 19A and Fig. 19B, the alert prediction section 202 calculates a probability (alert probability 4014) of generating a malfunction alert in a certain construction machine according to the data in the operation information table 101 and the alert history table 104.

Specifically, referring to Fig. 19A and Fig. 19B, first, the alert prediction section 202 acquires the operation information table 101 and the alert history table 104 (step S4040), and acquires one unprocessed item of the alarm ID of the malfunction alarm from the alert history table 104 (step S4041). Then, the alert prediction section 202 acquires the alert date (1042) on which the acquired alarm is generated for each machine ID from the alert history table 104, and acquires a row related to the alert date of the construction machine from the operation information table 101 (step S4043).

Then, the alert prediction section 202 estimates that the row related to the acquired alert date is the data in a malfunctional state, and, in contrast, estimates that the row related to a date on which the alarm is not generated is the data in a normal state without a malfunction, and learns as an identification model (step S4044). Then, the alert prediction section 202 acquires the data in the row in which the operation date is the current day from the operation information table 101 (step S4045), and acquires data in one row including an unprocessed machine ID from the acquired row data (step S4046). Then, using the identification model learned in step S4044, the alert prediction section 202 calculates a probability that the acquired row data is the data in the malfunctional state, and sets the calculated probability as an alert probability (step S4047). Then, the alert prediction section 202 numbers a unique malfunction prediction ID and stores it in the alert prediction table 401 (step S4048). Then, the alert prediction section 202 stores the acquired machine ID, the acquired alarm ID, the date of the current day, and the calculated alert probability in the row containing the malfunction prediction ID (step S4049). The above-described step S4046 to step S4049 are repeated until the processing of all of the machine IDs is completed (step S4050). It should be noted that the alert probability indicates a probability that a malfunction alarm of each alarm ID 4011 will be generated within a few days for each machine ID 4010 in the alert prediction table 401. As a method of calculating an alert probability, a known technique of change-point detection, such as Change Finder, may be used. Alternatively, such a method may be employed that the alert prediction section 202 interprets that the measurement data in the operation information table 101 on a day when an alarm is generated in a certain machine is abnormal data and the operation data in a period where an alarm is not generated, such as one month before and after a day, is normal data, learns them using a known identification model, such as a Random Forest model, and, using this model, predicts the probability of the operation data being abnormal as an alert probability.

In calculating an alert probability, it is required to evaluate on which day prior to the alert date of the malfunction alarm, alarm generation can be predicted with larger than or equal to a fixed percentage (for example, more than or equal to 90%) (in other words, whether or not the prediction that the alert probability is larger than or equal to a threshold (for example, 50%) can be obtained for a fixed percentage or more of predictions). In addition, in all of the predictions at a time period of from the alert date back until a few days prior to the alerting, the alert prediction section 202 calculates the maximum number of days during which alarm generation can be predicted with larger than or equal to a fixed percentage (for example, more than or equal to 90%) as a maximum number of days for alert prediction 4029. The calculated maximum number of days for alert prediction 4029 is stored in the maximum number of days for alert prediction 4029 in the order reception prediction table 402 of the order reception prediction result storage section 400 as a result of processing in the order reception probability calculation section 203.

The calculation of the maximum number of days for alert prediction 4029 is performed in step S4051 to step S4058. First, the alert prediction section 202 acquires data on the alert date for each machine ID from the alert history table 104, and acquires the row(s) related to a day(s) in a fixed period before the alert date from the operation information table 101 (step S4051). Next, after setting a count of a variable n indicating the number of days in the fixed period to 1 (step S4052), the alert prediction section 202 acquires data in the row(s) at a time period on and after n days prior to the alert date from the data in the acquired row(s) related to the day(s) in the fixed period (step S4053).

Then, the alert prediction section 202 applies the identification model to the acquired data in the rows at the time period on and after n days prior to the alert date, and determines whether data in the rows is determined to be malfunction data. Then, the alert prediction section 202 calculates a ratio of the data in the rows determined to be malfunction data to the data in the rows at the time period on and after n days prior to the alert date (step S4054).

The alert prediction section 202 determines whether the ratio calculated in step S4054 is less than or equal to a threshold (step S4055). If the ratio is less than or equal to a threshold (yes), the alert prediction section 202 sets a maximum number of days for alert prediction according to the variable n at the current point (step S4056). Meanwhile, if the ratio is greater than the threshold (no), the alert prediction section 202 adds 1 to the variable n (step S4057), and performs step S4053 to step 4057 again. The above-described step S4053 to step S4057 are repeated until the processing of all of the machine IDs is completed (step S4058).

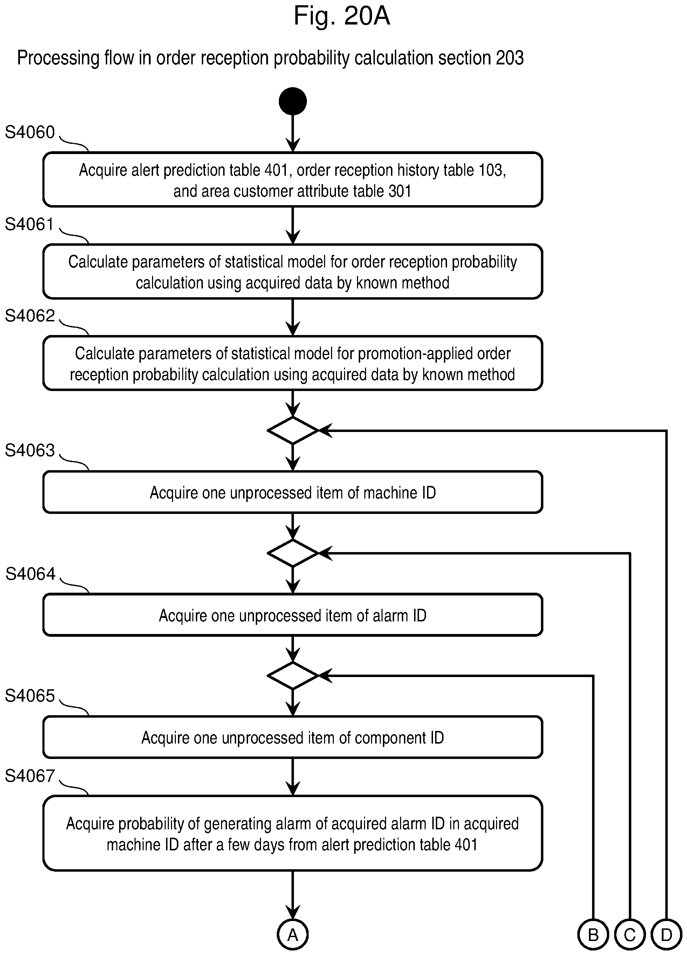

Next, referring to the flowcharts of Fig. 20A to Fig. 20B, an example of the processing flow in the order reception probability calculation section 203 will described. The order reception probability calculation section 203 calculates a probability that an order of a component in a certain construction machine will be generated within the maximum number of days for alert prediction with reference to the processing result in the area/customer characteristic estimation section 201, the processing result in the alert prediction section 202, and the data in the tables in the business data storage section 100. Basically, the procedure of calculating an order reception probability is as follows:

(1) Calculate an alert probability (i.e., a probability of generating a malfunction) obtained in the alert prediction section 202.
(2) Calculate a probability that a customer replaces a component as a countermeasure in response to an alarm.
(3) Calculate a probability of replacement with a genuine component, not a non-genuine component, and use the calculated probability as an order reception probability.

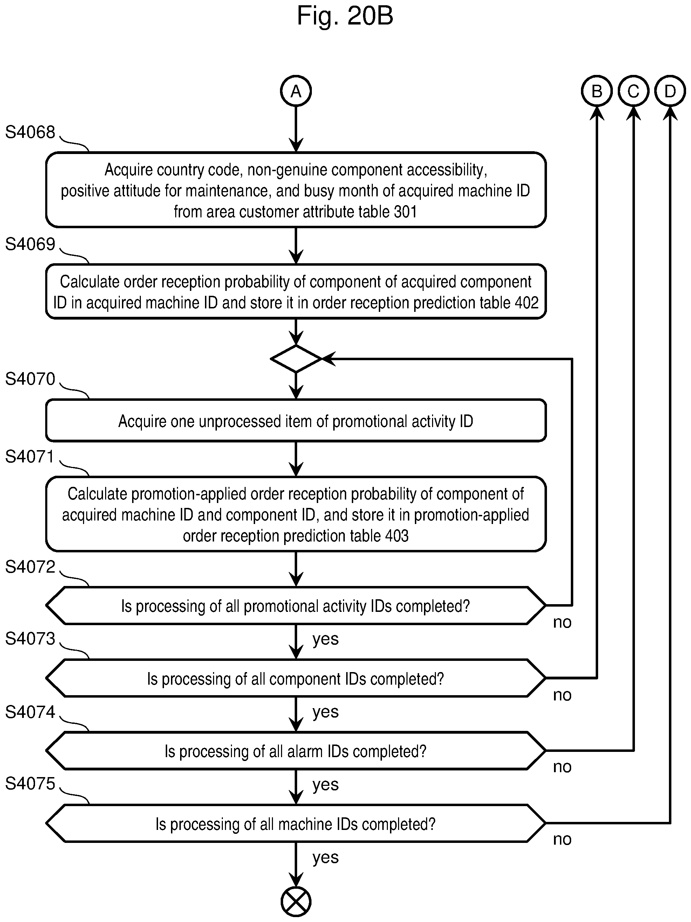

Referring to the flowcharts of Fig. 20A and Fig. 20B, a specific procedure of calculating an order reception probability will be described. First, the order reception probability calculation section 203 acquires the alert prediction table 401, the order reception history table 103, and the area customer attribute table 301 (step S4060).

Next, using the data acquired from these tables, the order reception probability calculation section 203 calculates parameters of a statistical model for order reception probability calculation by a known method (step S4061). Further, using the data acquired from these tables, the order reception probability calculation section 203 calculates parameters of a statistical model for promotion-applied order reception probability calculation by a known method (step S4062).

Next, from the order reception prediction table 402, the order reception probability calculation section 203 acquires one unprocessed item of the machine ID (step S4063), then one unprocessed item of the alarm ID (step S4064), and further, one unprocessed item of the component ID (step S4065). Then, in the acquired machine ID, the order reception probability calculation section 203 acquires a probability of generating the alarm of the acquired alarm ID in a predetermined period from the alert prediction table 401 (step S4067). Next, the order reception probability calculation section 203 acquires data on a country code (3013), a non-genuine component accessibility (3017), a positive attitude for maintenance (3018), and a busy month (3019) associated with the acquired machine ID from the area customer attribute table 301 (step S4068). Then, the order reception probability calculation section 203 calculates an order reception probability of the component of the component ID acquired in association with the acquired machine ID and stores it in the order reception prediction table 402 (step S4069).

Next, the order reception probability calculation section 203 acquires the promotional activity cost table 303 and acquires one unprocessed item of the promotional activity ID from the promotional activity cost table 303 (step S4070). Next, based on this promotional activity ID, the order reception probability calculation section 203 calculates a promotion-applied order reception probability of the component associated with the machine ID and the component ID acquired in step S4063 and step 4065, and stores it in the order reception prediction table 402 (step S4071). This step S4071 is repeated until the processing of all of the promotional activity IDs is completed (step S4072). Then, step S4067 to step 4071 are repeated until the processing of all combinations of the promotional activity IDs, the component IDs, the alarm IDs, and the machine IDs is completed (step S4072 to step 4075).

In one example, the calculation of an order reception probability in step S4069 can be performed by Bayesian inference as described below.

[Equation 1]

$$O\_i, j \sim \text{Bernoulli}(P\_i, j * alpha)$$

$$P\_i, j \sim \text{Bernoulli}(A\_i * beta)$$

$$\text{Logit } alpha = a\_0 + a\_1 * imitation + a\_2 * country$$

$$\text{Logit } beta = b\_0 + b\_1 * delta + b\_2 * hozen$$

$$j: \text{parts}$$

$$i: \text{alarm}$$

$$a\_n \sim \text{Norm}(0, 10^\wedge 3)$$

$$b\_m \sim \text{Norm}(0, 10^\wedge 3)$$

$$delta = 1: \text{prediction date is busy month } (country), \quad 0: \text{others}$$

The above expresses a statistical model representing a probability $O\_i, j$ of receiving an order of parts j for a generated alarm *i*. $O\_i, j$ is expressed by a Bernoulli distribution with parameters, probability $P\_i, j$ that a customer replaces a component, and probability *alpha* of purchasing a genuine component as the parts J.

The probability *alpha* of purchasing a genuine component may be calculated, as in the third expression of [Equation 1], by setting the non-genuine component accessibility 3017 (*imitation*) and the country code 3013 (*country*) as covariates with respect to a logit of the probability *alpha.* That is, a logit of the probability *alpha* is expressed by a linear sum of *imitation* and *country* using parameter *a_n.*

In addition, as in the second expression of [Equation 1], a probability $P\_i, $ j that a customer replaces a component may be expressed by a Bernoulli distribution with parameters, alert probability $A\_i$ of the alarm i obtained by the alert prediction section 202, and probability *beta* that a customer replaces a component in response to the alarm.

In addition, a probability *beta* that a customer replaces a component in response to the alarm can be calculated as a linear sum using parameters $b\_m$, by setting the positive attitude for maintenance 3018 (*hozen*) of the target customer and a parameter *delta*, which is 1 when the prediction date is busy month and which is 0 when the prediction date is not busy month, as covariates with respect to a logit of the probability *beta.* Note that the above-described statistical model can be implemented using a known probabilistic programming language, such as Stan.

Of the above-mentioned parameters, parameters $a\_n(n=0, 1, 2)$ and parameters $b\_n(n=0, 1, 2)$ have a prior distribution of a normal distribution with mean 0 and variance 1000. Posterior distributions of parameters may be obtained by using a known method, such as an MCMC algorithm, with data of presence or absence of an order of the parts j in the order reception history table 103 at a time period of less than or equal to a given number of days from generation of the alarm i in the alert history table 104, and with data of an alert probability $A\_i$ during alert prediction at a time earlier than the maximum number of days for alert prediction, during which generation of the alarm i can be predicted. Regarding the posterior distributions, different parameters may be obtained for respective alarms i or parts J.

To calculate an order reception probability, a distribution of the order reception probability is obtained using the obtained posterior distributions of parameters, and its mean value can be used as the order reception probability and stored in the order reception probability 4025 in the order reception prediction table 402 of the order reception prediction result storage section 400. In addition, in the order reception prediction table 402, the probability *alpha* of purchasing a genuine component can be stored in the genuine purchase probability 4026, the probability *beta* that a customer replaces a component in response to alarm generation can be stored in the component replacement probability 4027, and the alert probability *A_i* of the alarm can be stored in the alert probability 4028.

In one example, the calculation of a promotion-applied order reception probability in step S4071 can be performed using the following [Equation 2]:

$$[\text{Equation 2}]$$

$$O\_i, j, k \sim \text{Bernoulli}(P\_i, j * alpha\_k)$$

$$\text{Logit } alpha\_k = a\_0 + a\_1 * imitation + a\_2 * country + c\_k$$

$$c\_k \sim \text{Norm}(0, 10^{\wedge}3)$$

The above [Equation 2] expresses a statistical model representing a probability *O_i, j, k* of receiving an order of parts j for a generated alarm i when a promotional activity *k* is performed. A probability *alpha_k* of purchasing a genuine component may be calculated, as in the second expression of [Equation 2], by setting the non-genuine component accessibility 3017 (*imitation*) and the country code 3013 (*country*) as covariates with respect to a logit of the probability *alpha_k*. Further, an influence *c_k* of each promotional activity *k* on component purchase is added. This *c_k* may be calculated for each customer or area or may be multiplied by the positive attitude for maintenance 3018 of the target customer, for example. When a plurality of promotional activities *k* are performed, each corresponding *c_k* may be multiplied or added.

The prior distribution of the parameter *c_k* is a normal distribution with mean 0 and variance 1000. Posterior distributions of parameters may be obtained by using a known method, such as an MCMC algorithm, with data similar to that used in the calculation of an order reception probability without a promotional activity, and with data of the history of order reception obtained by referring to the promotional activity history table 304.

For an order reception probability when a promotional activity *k* is performed, a distribution of the order reception probability is obtained using the obtained posterior distributions of parameters, and its mean value can be used as the order reception probability and stored in the promotion-applied order reception probability 4032 in the promotion-applied order reception prediction table 403 of the order reception prediction result storage section 400. In addition, a probability that a customer purchases a genuine component when a promotional activity is performed can be stored in the promotion-applied genuine purchase probability 4033 in the promotion-applied order reception prediction table 403.

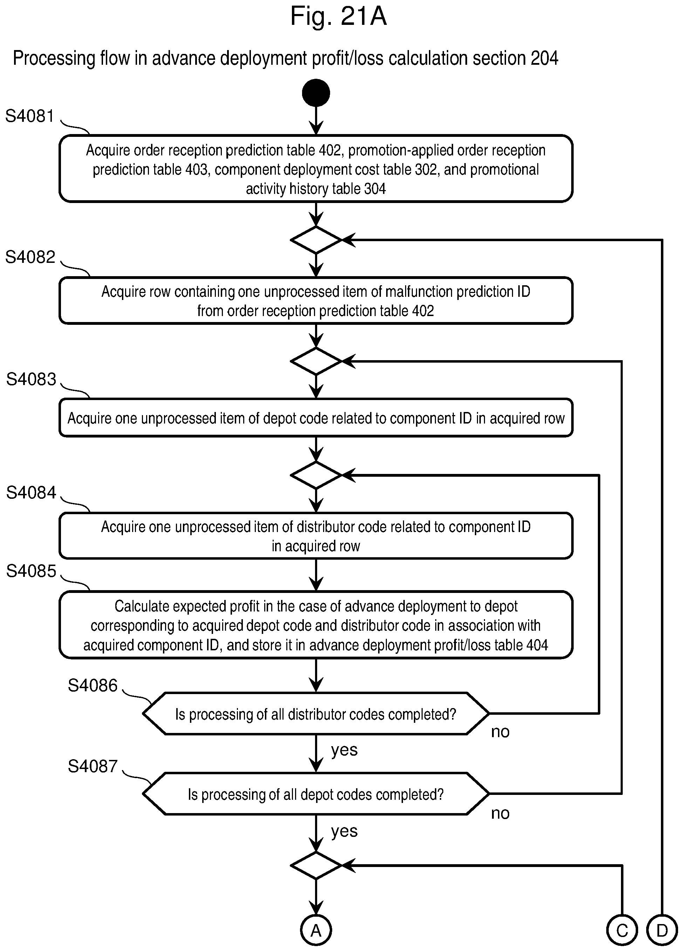

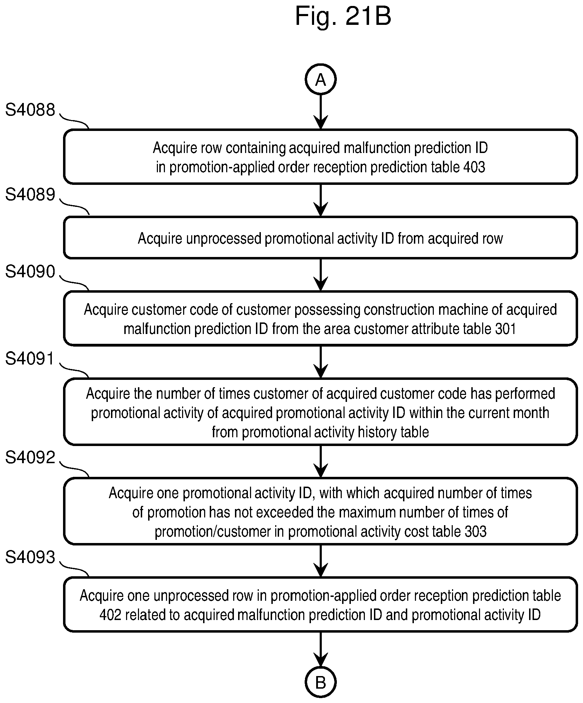

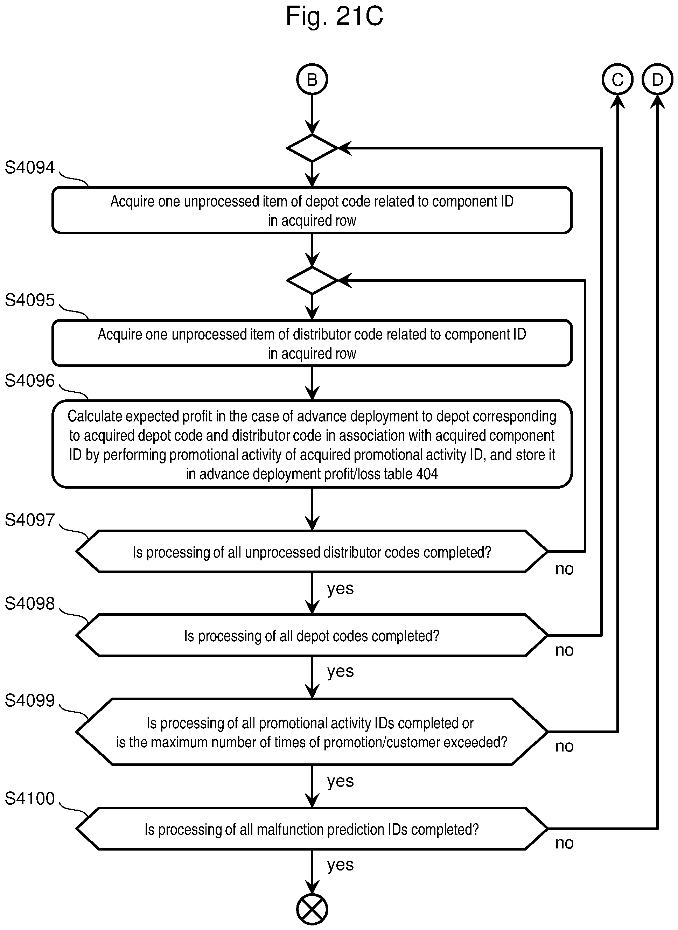

Referring to Fig. 21A to Fig. 21C, a specific procedure of calculating an advance deployment profit/loss will be described. In this procedure, the advance deployment profit/loss calculation section 204 predicts a profit/loss by advance deployment with reference to the data in the order reception prediction table 402, the promotion-applied order reception prediction table 403, the component deployment cost table 302, and the promotional activity history table 304. The profit/loss by advance deployment may include an advance deployment profit/loss when a promotional activity is not performed and an advance deployment profit/loss when a promotional activity is performed. Preferably, a profit/loss in both cases is predicted, but a profit/loss in only one of these cases may be predicted.

Specifically, first, the advance deployment profit/loss calculation section 204 acquires the data in the order reception prediction table 402, the promotion-applied order reception prediction table 403, the component deployment cost table 302, and the promotional activity history table 304 (step S4081).

Next, the advance deployment profit/loss calculation section 204 acquires data in the row containing one unprocessed item of the malfunction prediction ID from the data in the order reception prediction table 402 (step S4082). Then, the advance deployment profit/loss calculation section 204 acquires one unprocessed item of the depot code related to the component ID in the acquired row data from the component deployment cost table 302 (step S4083), and similarly acquires one unprocessed item of the distributor code related to the component ID in the acquired row data from the component deployment cost table 302 (step S4084). Then, the advance deployment profit/loss calculation section 204 calculates an expected profit when a component is deployed in advance to a depot corresponding to the acquired depot code and distributor code, and stores the calculated value in the advance deployment profit/loss table 404 (step S4085). The procedure in step S4083 to S4085 is repeated until the processing of all combinations of unprocessed distributor codes and depot IDs is completed (step S4086, S4087).

If the processing in step S4087 is completed (yes), next, in the promotion-applied order reception prediction table 403, the advance deployment profit/loss calculation section 204 acquires data in the row containing the malfunction prediction ID acquired in step S4082 (step S4088). Then, from the acquired row data, the advance deployment profit/loss calculation section 204 acquires data on an unprocessed promotional activity ID (step S4089). Then, the advance deployment profit/loss calculation section 204 acquires the customer code 3016 of the customer possessing the construction machine associated with the acquired malfunction prediction ID 4030 from the area customer attribute table 301 (step S4090).

Next, the advance deployment profit/loss calculation section 204 calculates the number of times the customer of the acquired customer code 3016 performed the promotional activity of the acquired promotional activity ID in a predetermined period (for example, within the current month) from the promotional activity history table 304 (step S4091). Then, with reference to the promotional activity cost table 303, the advance deployment profit/loss calculation section 204 acquires one promotional activity ID, with which the calculated number of times of promotion has not exceeded the maximum number of times of promotion/customer 3033 in the promotional activity cost table 303 (step S4092). Further, the advance deployment profit/loss calculation section 204 acquires one unprocessed row in the promotion-applied order reception prediction table 403 related to the acquired malfunction prediction ID and promotional activity ID (step S4093).

Then, the advance deployment profit/loss calculation section 204 acquires one unprocessed item of the depot code related to the component ID in the unprocessed row data from the component deployment cost table 302 (step S4094), and similarly acquires one unprocessed item of the distributor code related to the component ID in the acquired row data from the component deployment cost table 302 (step S4095). Then, the advance deployment profit/loss calculation section 204 calculates an expected profit in the case of advance deployment of a component to the depot corresponding to the acquired depot code and distributor code by performing the promotional activity of the acquired promotional activity ID, and stores the calculated value in the advance deployment profit/loss table 404 (step S4096). The procedure in step S4088 to S4096 is repeated until the processing of all combinations of unprocessed distributor codes and depot IDs is completed and also until the processing of all of the promotional activity IDs is completed or the number of times of promotion exceeds the value of the maximum number of times of promotion/customer (steps S4097, S4098, S4099). If all of the determinations in steps S4097, S4098, S4099 are "yes," it is determined whether the processing of all of the malfunction prediction IDs is completed (S4100), and if the determination in step S4100 is "no," the process returns to step S4082 and the above procedure is repeated. If the determination in step S4100 is "yes," all processing ends.

The expected profit of advance deployment, that is, a profit/loss difference between the case of advance deployment and the case of post deployment is calculated by the following equation:

Expected profit of advance deployment = profit/loss when an order is received by advance deployment*order reception portability +profit/loss when an order is not received by advance deployment*(1-order reception probability) -profit/loss when an order is received by post deployment*order reception probability　　　　[Equation 3]

In predicting a profit of advance deployment by the above equation, the advance deployment profit/loss calculation section 204 acquires information about a distributor in charge of the construction machine as a prediction target from the distributor code 3021 in the component deployment cost table 302. Then, in the component deployment cost table 302, the advance deployment profit/loss calculation section 204 refers to the costs in a row containing the component ID 3020 of the component of advance deployment and the distributor code 3021 that match.

The profit/loss when an order is received by advance deployment in the above equation can be calculated by subtracting the delivery cost 3025 of the component, the inventory cost per day 3027, and the malfunction loss per day 3028 in the component deployment cost table 302 from a gross margin obtained by multiplying the sales price 1023 by the gross profit rate 1024 in the inventory management table 102. However, the number of days required for delivery corresponds to the number of days required for standard delivery 3023, and the number of days by which the inventory cost and the malfunction loss are multiplied corresponds to the number of days obtained by subtracting the maximum number of days for alert prediction 4029 from the number of days required for delivery (0 days if the number of days is less than 0).

In addition, the profit/loss when an order is not received by advance deployment in the above equation can be calculated by deleting the gross margin and the malfunction loss and subtracting the expected disposal cost 3029 from the above-described profit/loss when an order is received by advance deployment, and changing the number of days by which the inventory cost is multiplied to the number of days for storing the stock as an indication. The number of days as an indication may be a value of 30 days, for example.

In addition, the profit/loss when an order is received by post deployment in the above equation can be calculated by subtracting the express delivery cost 3026 of the component, the inventory cost per day 3027, and the malfunction loss per day 3028 in the component deployment cost table 302 from a gross margin obtained by multiplying the sales price 1023 by the gross profit rate 1024 in the inventory management table 102. However, the number of days required for delivery corresponds to the number of days required for standard express delivery 3024, and the number of days by which the inventory cost and the malfunction loss are multiplied corresponds to an absolute value of the number of days obtained by subtracting the maximum number of days for alert prediction from the number of days required for delivery.

In the above-described manner, the advance deployment profit/loss calculation section 204 calculates an expected profit of advance deployment for the number of combinations of the distributor code 3021 and the depot code 3022 in the component deployment cost table 302 and stores the calculation result in the expected profit 4046 of the advance deployment profit/loss table 404. The advance deployment profit/loss calculation section 204 also calculates an expected profit of advance deployment when a promotional activity is performed. Specifically, the advance deployment profit/loss calculation section 204 substitutes the order reception probability in the above equation with the promotion-applied order reception probability 4032 in the promotion-applied order reception prediction table 403, and obtains an expected profit of advance deployment when a promotional activity is performed by subtracting the promotion cost 3032 in the promotional activity cost table 303 from the profit/loss when an order is not received by advance deployment. However, when the advance deployment profit/loss calculation section 204 calculates the number of times of promotion of each promotional activity ID 3030 in the current month with reference to the promotional activity history table 304, and if the number of times of promotion exceeds the maximum number of times of promotion/customer 3033 per month in the promotional activity cost table 303, the advance deployment profit/loss calculation section 204 does not calculate an expected profit of advance deployment when a promotional activity is performed for that promotional activity. The expected profit of advance deployment when a promotional activity is performed calculated through the above-described processing is stored in the expected profit 4046 in the same row as the promotional activity ID 4043 of the performed promotional activity in the advance deployment profit/loss table 404.

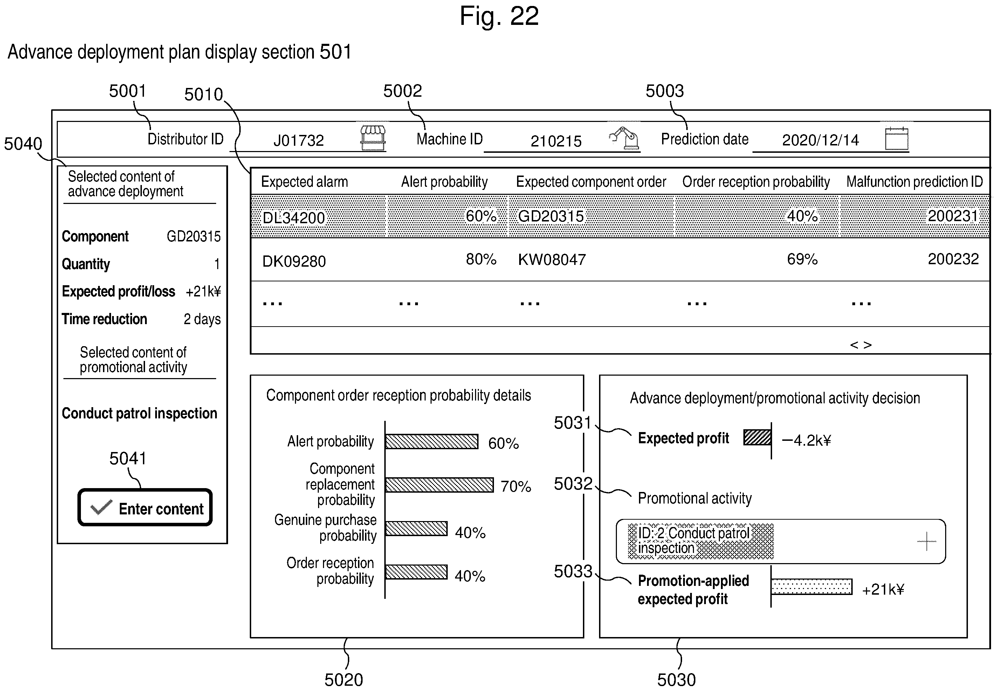

A component advance deployment plan including the above-calculated profit/loss by advance deployment is displayed in the advance deployment plan display section 501 of the distributor terminal 500. Fig. 22 shows an example of the advance deployment plan display section 501.

The advance deployment plan display section 501 acquires data stored in the order reception prediction result storage section 400 through the network 1, and stores the result of processing in the order reception prediction data storage section 300. The processing in the advance deployment plan display section 501 is sequentially executed each time a user operates the advance deployment plan display section 501.

The advance deployment plan display section 501 is configured to allow the user belonging to the distributor to enter a distributor code 5001, a machine ID 5002 of the construction machine of which the distributor is in charge, and a prediction date 5003, which is the date when a malfunction prediction is made.

When the above information is entered, the distributor terminal 500 refers to the order reception prediction table 402, extracts the data in the row containing the machine ID 4022 and the prediction date 4021 that match the entered information from the order reception prediction table 402, and displays in a prediction information display section 5010 (displays the content of the order reception prediction table 402), as a table, the alarm ID 4023 (expected alarm), the alert probability 4028, the component ID 4024 (expected component order), and the order reception probability 4025. When the user selects data in one row from the plurality of rows in the prediction information display section 5010 by a touch on the touch panel, a click by the mouse, or the like, the displays in an order reception probability details display section 5020, an advance deployment profit display section 5030, and an advance deployment content display section 5040 are updated.

The order reception probability details display section 5020 is configured to display the alert probability 4028, the component replacement probability 4027, the genuine purchase probability 4026, and the order reception probability 4025. These numerical values may be displayed by a bar chart, for example. The displayed numerical values are specified by referring to the order reception prediction table 402, specifically, a row containing the same malfunction prediction ID as that in the row selected in the prediction information display section 5010.

In one example, the advance deployment profit display section 5030 displays an expected profit 5031, a promotional activity 5032, and a promotion-applied expected profit 5033. The distributor terminal 500 refers to the advance deployment profit/loss table 404 and acquires data in a row containing the same malfunction prediction ID as that in the row selected in the prediction information display section 5010. Then, according to the row data, the advance deployment profit display section 5030 displays the expected profit 5031, the promotional activity 5032, and the promotion-applied expected profit 5033. When the promotional activity ID 4043 is not stored in the acquired row data, the display of the advance deployment profit display section 5030 is blank.

The user at the distributor may also select a desired promotional activity ID through the operation of the promotional activity selection section 5032. If the promotional activity ID is selected in the promotional activity selection section 5032, row data containing the same promotional activity ID as that in the row data selected in the prediction information display section 5010 is selected in the advance deployment profit/loss table 404, and according to the selected row data, the displays of the expected profit 5031 and the promotion-applied expected profit 5033 are also updated.

The advance deployment content display section 5040 displays information about the component selected in the prediction information display section 5010, and the content of the promotional activity selected in the promotional activity selection section 5032, and information about an expected profit/loss that agrees therewith.

The volume of the component is an estimate value based on the quantity data and the like in the order reception history table 103, for example. For the component volume data, a median, for example, is calculated for each component ID 1032, and displayed in the advance deployment content display section 5040.

In addition, the data related to time reduction by advance deployment is also displayed in this advance deployment content display section 5040. The distributor terminal 500 refers to the advance deployment profit/loss table 404, specifically, row data containing the same malfunction prediction ID 4040 as that in the row data selected in the prediction information display section 5010 by the user at the distributor, and further extracts the distributor code 4041 and the depot code 4042 included in the selected row data from the component deployment cost table 302. From the row data extracted in the component deployment cost table 302, the distributor terminal 500 extracts the number of days required for standard express delivery 3024 and the maximum number of days for alert prediction 4029, and calculates the number of days obtained by subtracting the number of days required for standard delivery 3023 from the sum of the number of days required for standard express delivery 3024 and the maximum number of days for alert prediction 4029. The calculated number of days is displayed in the advance deployment content display section 5040 as the number of days of time reduction.

When the user at the distributor confirms execution of the content of advance deployment displayed in the advance deployment content display section 5040, the user presses an advance deployment content confirmation button 5041. This stores the promotional activity ID 3041 of the promotional activity selected in the promotional activity selection section 5032 by the user at the distributor and the malfunction prediction ID 3040 in the promotional activity history table 304. Note that even if no promotional activity is selected, a row containing the promotional activity ID 3041 of 0 (blank) is stored in the promotional activity history table 304 as a record of the execution of advance deployment. In the promotion execution date 3043, however, the prediction date 5003 entered by the user at the distributor is stored.

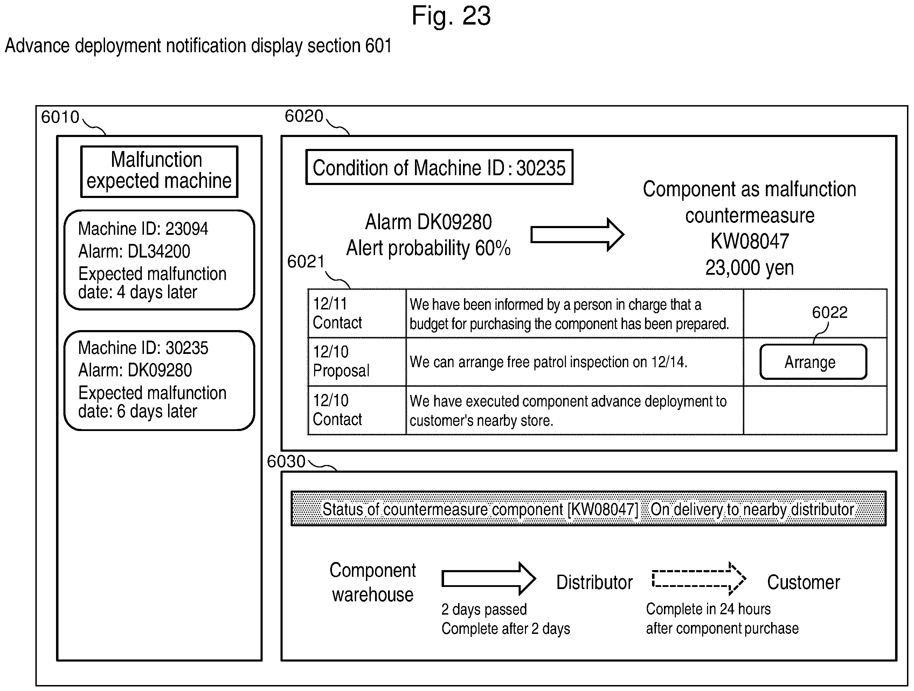

Referring to Fig. 23, an example of the screen of the advance deployment notification display section 601 will be described. The advance deployment notification display section 601 is installed on the customer terminal 600, and acquires data stored in the order reception prediction data storage section 300 and the order reception prediction result storage section 400 through the network 1. The data processing in the advance deployment notification display section 601 is sequentially executed each time the user operates the advance deployment notification display section 601.

The advance deployment notification display section 601 includes display areas, that is, a malfunction expected machine display section 6010 and a machine condition display section 6020. When the customer terminal 600 of a target customer receives an input operation, the advance deployment notification display section 601 refers to the alert prediction table 401, and displays a list of construction machines having the alert probability 4014 of larger than or equal to a given value, for example, 0.5, in the malfunction expected machine display section 6010. The malfunction expected machine display section 6010 displays the machine ID indicating information specifying the construction machine, information identifying an alarm to be generated in association with the machine, and an expected malfunction date. Any order of display may be set, such as in order of malfunction prediction date, from new to old, or in order of emergency level corresponding to a malfunction. Here, the user possessing the construction machine may select any one of the construction machines displayed in the malfunction expected machine display section 6010. When the user selects one of the construction machines, the display content in the machine condition display section 6020 and the advance deployment progress display section 6030 is updated.

The machine condition display section 6020 displays an alert probability of a certain construction machine and a component code and price of a component as a countermeasure when alerting is made and a malfunction occurs. Note that the display may be based only on the information at the time of operation, but is not limited thereto, and may include a prediction in the future. Since the component price itself may vary depending on the stock state or the like, for example, the machine condition display section 6020 may display the current price together with the expected price for the case of an increased alert probability. The set period may be changed to any period, such as one week later, two weeks later, and the like. In addition, the machine condition display section 6020 may simply display information about the stock state with expressions such as "many," "few," and "very few," in addition to the component as a countermeasure and the price. The format of notification may not be limited to a text format, and may be a graph format.

This allows a prompt response according to the emergency level corresponding to a malfunction and customer needs. These displays are based on the alert probability 4028 and the component ID 4024 in the order reception prediction table 402. In addition, a process (contact, proposal, and the like) of the promotional activity is displayed in the promotional activity history display section 6021. When there is a desire for arrangement of a component available from a nearby store, map information about the store candidates may be displayed.

As shown in Fig. 8, as for a promotional activity with two different promotional activity names 3031 (Conduct patrol inspection) labeled with and not labeled with (Approved) in the promotional activity cost table 303, when the promotional activity cost table 303 contains only a promotional activity not labeled with (Approved) for the same malfunction prediction ID 4020, the machine condition display section 6020 displays a promotional activity approval button 6022. When the user agrees with the promotional activity proposal, the user presses the promotional activity approval button 6022, and approves execution of the promotional activity. When the user presses the promotional activity approval button 6022, the promotional activity with (Approved) is added to the promotional activity history table 304.

In addition, the machine condition display section 6020 acquires a promotional activity performed in association with the malfunction prediction ID 4020 in the row data selected in the order reception prediction table 402 from the promotional activity history table 304, and displays it as the promotional activity history in the promotional activity history display section 6021.

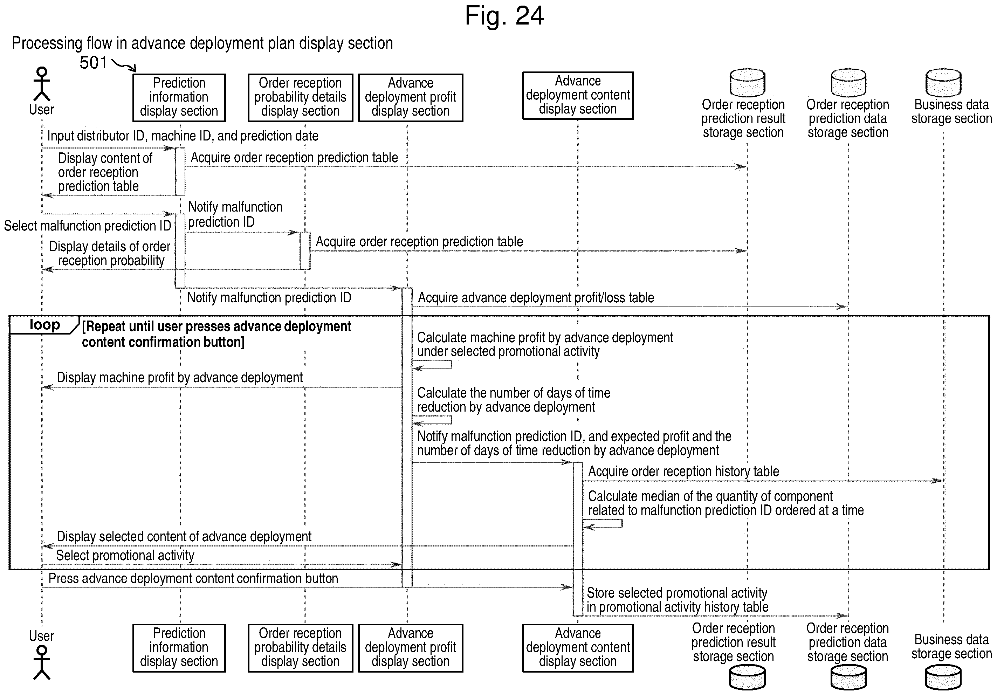

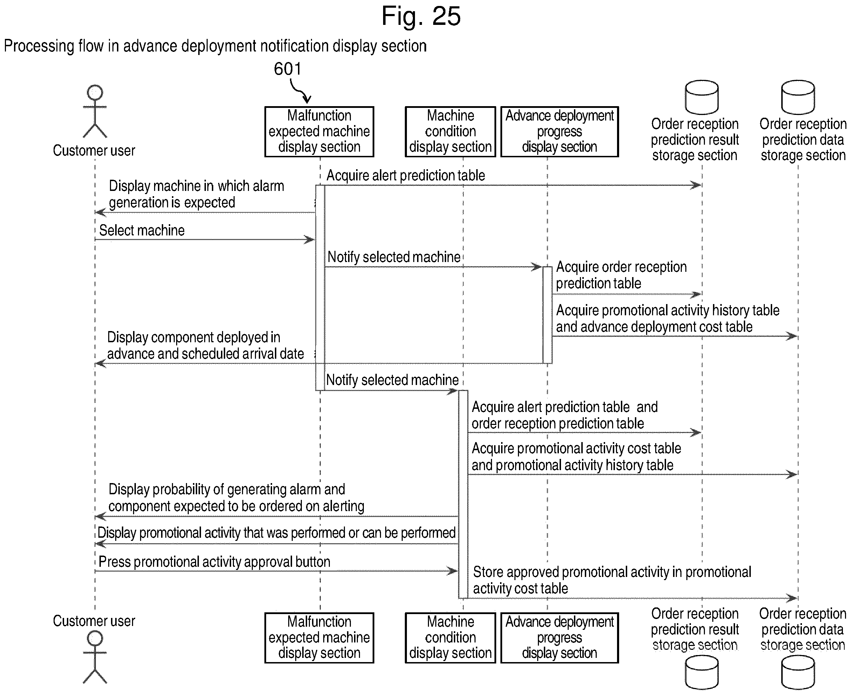

The advance deployment progress display section 6030 acquires a row containing the promotional activity ID 3041 of 0 (indicating that no promotional activity is performed) in the promotional activity history table 304, and displays when the shipment of the component on delivery is started and when the component on delivery will arrive for the machine in the machine condition display section 6020. However, the shipping start date corresponds to the promotion execution date 3043 in the promotional activity history table 304 and the scheduled arrival date is a value obtained by adding the number of days required for standard delivery 3023 to the promotion execution date 3043 in the component deployment cost table 302. Note that Fig. 24 and Fig. 25 are overviews of the procedure of the above-described operations in the advance deployment plan display section 501 and the advance deployment notification display section 601.

As described above, according to the system of the present embodiment, a characteristic of an area or a characteristic of a customer associated with a machine is estimated by an area/customer characteristic estimation section, and based on the outputs from the malfunction prediction section and the area/customer characteristic estimation section, an order reception probability, which is a probability of receiving an order of the component associated with the machine, is calculated. Since the system of the present embodiment makes a prediction of an order reception probability in consideration of the characteristic of the area or customer, it is possible to adjust the number of components actually ordered along with actual needs, and to reduce the likelihood of overstocking or stock shortage.

Although various embodiments of the present invention have been described above, the present invention is not limited to the aforementioned embodiments, and includes a variety of modifications. For example, the aforementioned embodiments have been described in detail to clearly illustrate the present invention, and the present invention need not include all of the configurations described in the embodiments. In addition, it is possible to replace a part of a configuration of an embodiment with a configuration of another embodiment. In addition, it is also possible to add, to a configuration of an embodiment, a configuration of another embodiment. Further, it is also possible to, for a part of a configuration of each embodiment, add, remove, or substitute a configuration of another embodiment.

Reference Signs List

1       Network
100     Business data storage section
101     Operation information table
102     Inventory management table
103     Order reception history table
104     Alert history table
200     Order reception prediction server
201     Area/customer characteristic estimation section
202     Alert prediction section
203     Order reception probability calculation section
204     Advance deployment profit/loss calculation section
300     Order reception prediction data storage section
301     Area customer attribute table
302     Component deployment cost table
303     Promotional activity cost table
304     Promotional activity history table
400     Order reception prediction result storage section
401     Alert prediction table
402     Order reception prediction table
403     Promotion-applied order reception prediction table
404     Advance deployment profit/loss table
500     Distributor terminal
501     Advance deployment plan display section
600     Customer terminal
601     Advance deployment notification display section

**Claims**

1. A component advance deployment assistance system, comprising a server, the server comprising:

   a malfunction prediction section that predicts a malfunction of a machine based on operation information about the machine;
   an area/customer characteristic estimation section that estimates a characteristic of an area or a characteristic of a customer possessing or using the machine, based on data related to the machine possessed or used by a customer;
   an order reception probability calculation section that calculates an order reception probability that is a probability of receiving an order of a component associated with the machine, based on outputs from the malfunction prediction section and the area/customer characteristic estimation section; and
   an advance deployment profit/loss calculation section that calculates a profit/loss in a case of advance deployment of the component to a base near a location of the machine, based on the order reception probability.

2. The component advance deployment assistance system according to claim 1, wherein the malfunction prediction section is an alert prediction section that predicts generation of a malfunction alarm from the machine to report a malfunction of the machine.

3. The component advance deployment assistance system according to claim 1, wherein:

   the order reception probability calculation section calculates a promotion-applied order reception probability when a promotional activity associated with the component is performed; and
   the advance deployment profit/loss calculation section calculates the profit/loss when the promotional activity is performed.

4. The component advance deployment assistance system according to claim 1, wherein the area/customer characteristic estimation section estimates the characteristic according to a non-genuine component accessibility indicating an availability of a non-genuine component as the component.

5. The component advance deployment assistance system according to claim 4, wherein the non-genuine component accessibility is determined according to a history of generation of a malfunction alarm of the machine, an order reception history, and information about an operation state of the machine.

6. The component advance deployment assistance system according to claim 1, wherein the area/customer characteristic estimation section estimates the characteristic according to a positive attitude for maintenance of the customer.

7. The component advance deployment assistance system according to claim 6, wherein the area/customer characteristic estimation section determines the positive attitude for maintenance of the customer based on an index related to soundness of a component installed on the machine and an order reception frequency of the component.

8. The component advance deployment assistance system according to claim 1, wherein the area/customer characteristic estimation section estimates the characteristic according to a busy month for business of the customer.

9. The component advance deployment assistance system according to claim 1, further comprising an advance deployment notification display section that displays information about advance deployment of the component based on the order reception probability and the profit/loss,
   wherein the advance deployment notification display section displays the information for each machine.

10. A component advance deployment assistance method, comprising:

    predicting a malfunction of a machine based on operation information about the machine;
    estimating a characteristic of an area or a characteristic of a customer possessing or using the machine;
    calculating an order reception probability that is a probability of receiving an order of a component associated with the machine, based on a result of prediction of the malfunction and a result of estimation of the characteristic; and
    calculating a profit/loss in a case of advance deployment of the component to a base near a location of the machine, based on the order reception probability.

# Fig. 1

**100** — Business data storage section

**101** Operation information table

**102** Inventory management table

**103** Order reception history table

**104** Alert history table

Order reception prediction server

**200** **201** Area/customer characteristic estimation section

**203** Order reception probability calculation section

**202** Alert prediction section

**204** Advance deployment profit/loss calculation section

**300** Order reception prediction data storage section

**301** Area customer attribute table

**302** Component deployment cost table

**303** Promotional activity cost table

**304** Promotional activity history table

**400** Order reception prediction result storage section

**401** Alert prediction table

**402** Order reception prediction table

**403** Promotion-applied order reception prediction table

**404** Advance deployment profit/loss table

Network

**1**

Distributor terminal

**500** **501** Advance deployment plan display section

Distributor

Customer terminal

**600** **601** Advance deployment notification display section

Customer

# Fig. 2

Operation information table 101

| Machine ID (1010) | Operation date (1011) | Operation time (1012) | Battery SOH (1013) | ... | Engine intake-air temperature_ lowest value (1014) | Engine exhaust-gas temperature_ highest value (1015) |
|---|---|---|---|---|---|---|
| 23094 | 2020/12/12 | 2252 | 0.84 | | 12 | 64 |
| 30235 | 2020/12/12 | 4098 | 0.94 | | 8 | 54 |
| ... | | | | | | |

# Fig. 3

Inventory management table 102

| Distributor code (1020) | Component ID (1021) | Quantity (1022) | Sales price (1023) | Gross profit rate (1024) |
|---|---|---|---|---|
| NE2308 | GD20315 | 2 | 23,000 | 0.5 |
| DS2301 | GD20315 | 4 | 1,200 | 0.6 |
| ... | | | | |

# Fig. 4

Order reception history table 103

| Order ID (1030) | Machine ID (1031) | Component ID (1032) | Component name (1033) | Quantity (1034) | Order date (1035) |
|---|---|---|---|---|---|
| 202020472 | 23094 | GD20315 | O-ring | 1 | 2020/12/23 |
| 202020473 | 30235 | KW08047 | Battery | 1 | 2020/12/25 |
| ... | | | | | |

# Fig. 5

Alert history table 104

| Machine ID (1040) | Alarm ID (1041) | Alert date (1042) |
|---|---|---|
| 23094 | DL34200 | 2020/12/22 |
| 30235 | DK09280 | 2020/12/14 |
| ... | | |

# Fig. 6

Area customer attribute table 301

| 3010 | 3011 | 3012 | 3013 | 3014 | 3015 | 3016 | 3017 | 3018 | 3019 |
|---|---|---|---|---|---|---|---|---|---|
| Machine ID | Application start date | Application end date | Country code | Distributor code | Area code | Customer code | Non-genuine component accessibility | Positive attitude for maintenance | Busy month |
| 23094 | 2017/11/01 | 2019/05/20 | JP | NE2308 | EH | 3E32 | 0.9 | 5.6 | 5 |
| 23094 | 2019/05/20 | | JP | DS2301 | HR | 1A29 | 0.53 | 2.2 | 12 |
| ... | | | | | | | | | |

# Fig. 7

Component deployment cost table 302

| 3020 | 3021 | 3022 | 3023 | 3024 | 3025 | 3026 | 3027 | 3028 | 3029 |
|---|---|---|---|---|---|---|---|---|---|
| Component ID | Distributor code | Depot code | Number of days required for standard delivery | Number of days required for standard express delivery | Delivery cost | Express delivery cost | Inventory cost per day | Malfunction loss per day | Expected disposal cost |
| GD20315 | NE2308 | DPJP02345 | 5 | 3 | 4000 | 4000 | 200 | 600 | 2000 |
| KW08047 | NE2308 | DPJP02345 | 7 | 5 | 1200 | 3000 | 15 | 100 | 300 |
| ... | | | | | | | | | |

# Fig. 8

Promotional activity cost table 303

| Promotional activity ID | Promotional activity name | Promotion cost | Maximum number of times of promotion/customer |
|---|---|---|---|
| 3030 | 3031 | 3032 | 3033 |
| 1 | Send budgeting request email | 0 | 3 |
| 2 | Conduct patrol inspection | 0 | 5 |
| 3 | Conduct patrol inspection (Approved) | 30000 | 999 |
| 4 | Component price cut 10k | 10000 | 5 |
| ... | | | |

# Fig. 9

Promotional activity history table 304

| Malfunction prediction ID | Promotional activity ID | Customer ID | Promotion execution date |
|---|---|---|---|
| 3040 | 3041 | 3042 | 3043 |
| 200231 | 2 | 3E32 | 2020/12/14 |
| 200231 | 0 | 3E32 | 2020/12/12 |
| 200232 | 1 | 1A29 | 2020/12/23 |
| ... | | | |

# Fig. 10

Alert prediction table 401

| Machine ID | Alarm ID | Prediction date | Malfunction prediction ID | Alert probability |
|---|---|---|---|---|
| 4010 | 4011 | 4012 | 4013 | 4014 |
| 23094 | DL34200 | 2020/12/12 | 200231 | 0.66 |
| 23094 | MK32508 | 2020/12/12 | 200231 | 0.43 |
| 30235 | DK09280 | 2020/12/12 | 200232 | 0.56 |
| ... | | | | |

# Fig. 11

Order reception prediction table 402

| Malfunction prediction ID | Prediction date | Machine ID | Alarm ID | Component ID | Order reception probability | Genuine purchase probability | Component replacement probability | Alert probability | Maximum number of days for alert prediction |
|---|---|---|---|---|---|---|---|---|---|
| 4020 | 4021 | 4022 | 4023 | 4024 | 4025 | 4026 | 4027 | 4028 | 4029 |
| 200231 | 2020/12/22 | 23094 | DL34200 | GD20315 | 0.4 | 0.4 | 0.7 | 0.6 | 4 |
| 200232 | 2020/12/14 | 30235 | DK09280 | KW08047 | 0.69 | 0.9 | 0.7 | 0.8 | 5 |
| ... | | | | | | | | | |

# Fig. 12

Promotion-applied order reception prediction table 403

| Malfunction prediction ID | Promotional activity ID | Promotion-applied order reception probability | Promotion-applied genuine purchase probability |
|---|---|---|---|
| 200231 | 2 | 0.8 | 0.86 |
| 200232 | 1 | 0.72 | 0.95 |
| ... | | | |

4030    4031    4032    4033

# Fig. 13

Advance deployment profit/loss table 404

| Malfunction prediction ID | Distributor code | Depot code | Promotional activity ID | Number of days required for deployment | Order reception probability | Expected profit |
|---|---|---|---|---|---|---|
| 200231 | NE2308 | DPJP02345 | | 5 | 0.4 | -4200 |
| 200231 | NE2308 | DPJP02345 | 2 | 5 | 0.8 | 20900 |
| ... | | | | | | |

4040    4041    4042    4043    4044    4045    4046

# Fig. 14

Processing flow in order reception prediction server 200

S201 — Execute processing in area/customer characteristic estimation section 201 and store result in area customer attribute table 301

S202 — Execute processing in alert prediction section 202 and store result in alert prediction table 401

S203 — Execute processing in order reception probability calculation section 203 and store results in order reception prediction table 402 and promotion-applied order reception prediction table 403

S204 — Execute processing in advance deployment profit/loss calculation section 204 and store result in advance deployment profit/loss table 404

# Fig. 15

Processing flow in area/customer characteristic estimation section 201

S2009 — Acquire operation information table 101, alert history table 104, and order reception history table 103

S2010 — Calculate accessibility to non-genuine components using acquired tables

S2011 — Calculate positive attitude for maintenance using acquired tables

S2012 — Calculate busy month using acquired tables

# Fig. 16A

Calculation flow of accessibility to non-genuine components (S2010)

S3010
Acquire area customer attribute table 301

S3011
Acquire one unprocessed item of area code 3015

S3012
Acquire one unprocessed item of machine ID 3010

S3013
Acquire alarm generation related to acquired machine ID 3010
from alert history table 104

S3014
Acquire component order reception related to acquired machine ID 3010
from order reception history table 103

S3015
Acquire alarm generation date on which component order is not received
within fixed period after alarm generation

S3016
Acquire operation time of machine in fixed period on or before
the acquired alarm generation date from operation information table 101
and calculate average value thereof

A        B   C

# Fig. 16B

Ⓐ

Ⓑ Ⓒ

S3017 — Is operation time equal to or less than constant rate with respect to the calculated average value of operation time in fixed period on or after the acquired alarm generation date?

no

yes

S3018 — Add 1 to the number-of-times of reduction in operation time of construction machine

S3019 — Is processing of all machine IDs completed?

no

yes

S3020 — Calculate average value of the number-of-times N of reduction in operation time of construction machine for each machine ID

S3021 — Is processing of all area codes completed?

no

yes

S3022 — Calculate average value of the number-of-times N of reduction in operation time of construction machine for each area code, and store the value in non-genuine component accessibility of area customer attribute table 301

⊗

# Fig. 17

Calculation flow of positive attitude for maintenance (S2011)

S4010 — Acquire area customer attribute table 301

S4011 — Acquire one unprocessed item of customer code 3016

S4012 — Acquire machine ID 3010 corresponding to acquired customer code 3016
from area customer attribute table 301

S4013 — Acquire battery SOH related to acquired machine ID 3010
from operation information table 101

S4014 — Acquire order date of component order reception in which component name related
to acquired machine ID 3010 is "battery" from order reception history table 103

S4015 — Calculate average value of battery SOH on order date of battery component

S4016 — Calculate average order reception frequency of battery component in one year

S4017 — Calculate multiplication between calculated average value of battery SOH and
average order reception frequency

S4018 — Calculate average value of calculated multiplication result for each customer code
and store in positive attitude for maintenance in area customer attribute table 301

S4019 — Is processing of all customer codes completed?    no

yes

# Fig. 18

Calculation flow of busy month (S2012) ●

S4030
┌─────────────────────────────────────────────────────┐
│ Acquire area customer attribute table 301 │
└─────────────────────────────────────────────────────┘

S4031
┌─────────────────────────────────────────────────────┐
│ Acquire one unprocessed item of customer code 3016 │
└─────────────────────────────────────────────────────┘

S4032
┌─────────────────────────────────────────────────────┐
│ Acquire operation time corresponding to acquired customer code 3016 │
│ from operation information table 101 │
└─────────────────────────────────────────────────────┘

S4033
┌─────────────────────────────────────────────────────┐
│ Resolve acquired operation time into season component in 1-year cycle, │
│ random component, and trend component │
└─────────────────────────────────────────────────────┘

S4034
┌─────────────────────────────────────────────────────┐
│ Calculate third quartile in resolved season component of operation time │
│ on each day │
└─────────────────────────────────────────────────────┘

S4035
┌─────────────────────────────────────────────────────┐
│ Acquire resolved season component of operation time on each day │
└─────────────────────────────────────────────────────┘

S4036
⟨ Is average value of acquired season component in the month
  larger than or equal to third quartile? ⟩ no

↓ yes

S4037
┌─────────────────────────────────────────────────────┐
│ Store processed month in busy month of area customer attribute table │
│ corresponding to acquired customer code │
└─────────────────────────────────────────────────────┘

S4038
⟨ Is processing of all months completed? ⟩ no

↓ yes

S4039
⟨ Is processing of all customer codes completed? ⟩ no

↓ yes

⊗

# Fig. 19A

Processing flow in alert prediction section 202

S4040
Acquire operation information table 101 and alert history table 104

S4041
Acquire one unprocessed item of alarm ID of alarm

S4042
Acquire alert date on which acquired alarm is generated for each machine ID from alert history table 104 and acquire row related to the alert date of the construction machine from operation information table 101

S4043
Acquire date on which acquired alarm is not generated for each machine ID around fixed period from alert history table 104 and acquire row related to the date on which alarm is not generated from operation information table

S4044
Let identification model learn malfunction data which is row related to the acquired alert date and normal data which is row related to the date on which alarm is not generated

S4045
Acquire row in which operation date is current day from operation information table 101

S4046
Acquire one row including unprocessed machine ID from acquired rows

S4047
Calculate probability that row acquired using learned identification model is malfunction data, and set calculated probability as alert probability

S4048
Assign unique malfunction prediction ID and store in alert prediction table 401

(A)                                                                          (B) (C)

# Fig. 19B

Ⓐ                                                                    Ⓑ  Ⓒ

S4049
Store acquired machine ID, acquired alarm ID, date of the current day, and calculated alert probability in row containing malfunction prediction ID

S4050
Is processing of all machine IDs completed? — no

yes

S4051
Acquire data on alert date from alert history table and acquire row related to day(s) in fixed period from the alert date from operation information table 101

S4052
Set the number-of-days n count to 1

S4053
Acquire rows at time period on and after n days prior to alert date from acquired row related to day(s) in fixed period

S4054
Calculate ratio of rows determined to be malfunction data

S4055
yes — Is ratio less than or equal to threshold? — no

S4056
Set variable n as the maximum number of days for alert prediction

S4057
Add 1 to n

S4058
Is processing of all machine IDs completed? — no

yes

⊗

# Fig. 20A

Processing flow in order reception probability calculation section 203

S4060
Acquire alert prediction table 401, order reception history table 103, and area customer attribute table 301

S4061
Calculate parameters of statistical model for order reception probability calculation using acquired data by known method

S4062
Calculate parameters of statistical model for promotion-applied order reception probability calculation using acquired data by known method

S4063
Acquire one unprocessed item of machine ID

S4064
Acquire one unprocessed item of alarm ID

S4065
Acquire one unprocessed item of component ID

S4067
Acquire probability of generating alarm of acquired alarm ID in acquired machine ID after a few days from alert prediction table 401

(A)    (B) (C) (D)

# Fig. 20B

(A)                                                                    (B) (C) (D)

S4068

Acquire country code, non-genuine component accessibility,
positive attitude for maintenance, and busy month of acquired machine ID
from area customer attribute table 301

S4069

Calculate order reception probability of component of acquired component
ID in acquired machine ID and store it in order reception prediction table 402

S4070

Acquire one unprocessed item of promotional activity ID

S4071

Calculate promotion-applied order reception probability of component of
acquired machine ID and component ID, and store it in promotion-applied
order reception prediction table 403

S4072

Is processing of all promotional activity IDs completed?

no

yes

S4073

Is processing of all component IDs completed?

no

yes

S4074

Is processing of all alarm IDs completed?

no

yes

S4075

Is processing of all machine IDs completed?

no

yes

⊗

# Fig. 21A

Processing flow in advance deployment profit/loss calculation section 204

S4081 — Acquire order reception prediction table 402, promotion-applied order reception prediction table 403, component deployment cost table 302, and promotional activity history table 304

S4082 — Acquire row containing one unprocessed item of malfunction prediction ID from order reception prediction table 402

S4083 — Acquire one unprocessed item of depot code related to component ID in acquired row

S4084 — Acquire one unprocessed item of distributor code related to component ID in acquired row

S4085 — Calculate expected profit in the case of advance deployment to depot corresponding to acquired depot code and distributor code in association with acquired component ID, and store it in advance deployment profit/loss table 404

S4086 — Is processing of all distributor codes completed?    no

yes

S4087 — Is processing of all depot codes completed?    no

yes

(A)          (C) (D)

# Fig. 21B

(A)

S4088
Acquire row containing acquired malfunction prediction ID
in promotion-applied order reception prediction table 403

S4089
Acquire unprocessed promotional activity ID from acquired row

S4090
Acquire customer code of customer possessing construction machine of acquired
malfunction prediction ID from the area customer attribute table 301

S4091
Acquire the number of times customer of acquired customer code has performed
promotional activity of acquired promotional activity ID within the current month
from promotional activity history table

S4092
Acquire one promotional activity ID, with which acquired number of times
of promotion has not exceeded the maximum number of times of
promotion/customer in promotional activity cost table 303

S4093
Acquire one unprocessed row in promotion-applied order reception prediction table
402 related to acquired malfunction prediction ID and promotional activity ID

(B)

# Fig. 21C

(B)   (C) (D)

**S4094**
Acquire one unprocessed item of depot code related to component ID
in acquired row

**S4095**
Acquire one unprocessed item of distributor code related to component ID
in acquired row

**S4096**
Calculate expected profit in the case of advance deployment to depot corresponding
to acquired depot code and distributor code in association with acquired component
ID by performing promotional activity of acquired promotional activity ID, and store it
in advance deployment profit/loss table 404

**S4097**
Is processing of all unprocessed distributor codes completed? — no

yes

**S4098**
Is processing of all depot codes completed? — no

yes

**S4099**
Is processing of all promotional activity IDs completed or
is the maximum number of times of promotion/customer exceeded? — no

yes

**S4100**
Is processing of all malfunction prediction IDs completed? — no

yes

⊗

## Fig. 22

Advance deployment plan display section 501

EP 4 398 169 A1

| | Distributor ID | J01732 | Machine ID | 210215 | Prediction date | 2020/12/14 |

**Selected content of advance deployment**

| Component | GD20315 |
| Quantity | 1 |
| Expected profit/loss | +21k¥ |
| Time reduction | 2 days |

Selected content of promotional activity

**Conduct patrol inspection**

5041

✓ Enter content

| Expected alarm | Alert probability | Expected component order | Order reception probability | Malfunction prediction ID |
|---|---|---|---|---|
| DL34200 | 60% | GD20315 | 40% | 200231 |
| DK09280 | 80% | KW08047 | 69% | 200232 |
| ... | ... | ... | ... | ... |

< >

**Component order reception probability details**

| | |
|---|---|
| Alert probability | 60% |
| Component replacement probability | 70% |
| Genuine purchase probability | 40% |
| Order reception probability | 40% |

5020

**Advance deployment/promotional activity decision**

**Expected profit** ▨ −4.2k¥

5031

Promotional activity

5032

ID:2 Conduct patrol inspection +

**Promotion-applied expected profit** +21k¥

5033

5030

# Fig. 23

Advance deployment notification display section 601

6010

**Malfunction expected machine**

Machine ID: 23094
Alarm: DL34200
Expected malfunction date: 4 days later

Machine ID: 30235
Alarm: DK09280
Expected malfunction date: 6 days later

6020

Condition of Machine ID : 30235

Alarm DK09280
Alert probability 60%

⟹

Component as malfunction countermeasure
KW08047
23,000 yen

6021

| 12/11 Contact | We have been informed by a person in charge that a budget for purchasing the component has been prepared. | 6022 |
| --- | --- | --- |
| 12/10 Proposal | We can arrange free patrol inspection on 12/14. | Arrange |
| 12/10 Contact | We have executed component advance deployment to customer's nearby store. | |

6030

Status of countermeasure component [KW08047]　On delivery to nearby distributor

Component warehouse　⟹　Distributor　---->　Customer

2 days passed
Complete after 2 days

Complete in 24 hours
after component purchase

EP 4 398 169 A1

# Fig. 24

Processing flow in advance deployment plan display section

# Fig. 25

Processing flow in advance deployment notification display section

601

## INTERNATIONAL SEARCH REPORT

International application No.

**PCT/JP2022/032539**

### A. CLASSIFICATION OF SUBJECT MATTER

*G06Q 10/087*(2023.01)i; *G05B 19/418*(2006.01)i; *G06Q 10/04*(2023.01)i; *G06Q 10/0631*(2023.01)i; *G06Q 10/20*(2023.01)i
FI:   G06Q10/08 330; G06Q10/00 300; G06Q10/06 302; G05B19/418 Z; G06Q10/04

According to International Patent Classification (IPC) or to both national classification and IPC

### B. FIELDS SEARCHED

Minimum documentation searched (classification system followed by classification symbols)

G06Q10/00-99/00; G05B19/418

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2018-169684 A (HITACHI CONSTRUCTION MACHINERY) 01 November 2018 (2018-11-01)<br>entire text, all drawings | 1-10 |
| A | JP 2005-322094 A (HITACHI LTD) 17 November 2005 (2005-11-17)<br>entire text, all drawings | 1-10 |
| A | JP 2014-130468 A (MITSUBISHI HEAVY IND LTD) 10 July 2014 (2014-07-10)<br>entire text, all drawings | 1-10 |
| A | JP 2016-62382 A (HITACHI LTD) 25 April 2016 (2016-04-25)<br>entire text, all drawings | 1-10 |

☐ Further documents are listed in the continuation of Box C.     ☑ See patent family annex.

\*     Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| **14 November 2022** | **22 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/032539**

| Patent document cited in search report | | | Publication date (day/month/year) | Patent family member(s) | Publication date (day/month/year) |
|---|---|---|---|---|---|
| JP | 2018-169684 | A | 01 November 2018 | (Family: none) | |
| JP | 2005-322094 | A | 17 November 2005 | (Family: none) | |
| JP | 2014-130468 | A | 10 July 2014 | (Family: none) | |
| JP | 2016-62382 | A | 25 April 2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2006033249 A